# EUROPEAN PATENT APPLICATION

(11) **EP 4 492 193 A1**
(43) Date of publication of application: **15.01.2025**
(21) Application number: 24727626.4
(22) Date of filing: 29.05.2024
(51) Int. Cl.: G06F 1/16, G09F 9/30

(54) **SUPPORT STRUCTURE FOR SUPPORTING FLEXIBLE DISPLAY, AND ELECTRONIC DEVICE COMPRISING SAME**

(30) Priority: 02.06.2023 KR 20230071403; 27.06.2023 KR 20230082398
(71) Applicant: Samsung Electronics Co., Ltd., Suwon-si, Gyeonggi-do (KR)
(72) Inventor: CHOI, Junyoung, Suwon-si Gyeonggi-do 16677 (KR); AHN, Jaeuk, Suwon-si Gyeonggi-do 16677 (KR); YOON, Yeonggyu, Suwon-si Gyeonggi-do 16677 (KR); KANG, Youngmin, Suwon-si Gyeonggi-do 16677 (KR); SHIN, Moonchul, Suwon-si Gyeonggi-do 16677 (KR); CHO, Joongyeon, Suwon-si Gyeonggi-do 16677 (KR); YOON, Byounguk, Suwon-si Gyeonggi-do 16677 (KR)
(74) Representative: Appleyard Lees IP LLP
(86) International application number: PCT/KR2024/007325
(87) International publication number: WO 2024/248479

(57) **Abstract**

An electronic device comprises a first housing (201), a second housing (202) configured to move with respect to the first housing, and a flexible display (203) including a first display area (A1) and a second display area (A2) extending from the first display area. The second display area can be rolled in/out with the second housing. A plurality of bars (214) is arranged under the second display area, and a plate (218) is disposed between the second display area and the plurality of bars and configured to support at least a portion of the second display area. The plate includes alternately arranged first pattern areas (410) and second pattern areas (420). Shapes of the second pattern areas differ from shapes of the first pattern areas. The first pattern areas are disposed not to face the plurality of bars, and each second pattern area is disposed to face a bar.

## Description

### [Technical Field]

Various embodiments of the disclosure relate to a flexible display and an electronic device including the same.

### [Background Art]

A single electronic device or portable communication device can include multiple functionalities. For example, smartphones include the functionalities of a sound player, imaging device, and scheduler, as well as the communication functionality of a telephone and, on top of that, may implement more functions by having applications installed thereon.

As the use of smartphones or other personal/portable communication devices increases, users' demand for portability and user convenience is on the rise. To meet this demand, not only may a touchscreen display serve as a visual information output device, but also it may provide a virtual keyboard that replaces a mechanical input device (e.g., a button keyboard). As such, communication devices or electronic devices may be made more compact or portable, while providing further enhanced applicability and user convenience (e.g., a larger screen).

### [Disclosure of Invention]

### [Solution to Problems]

An electronic device according to an embodiment of the disclosure may comprise a first housing, a second housing configured to move with respect to the first housing, a flexible display including a first display area and a second display area extended from the first display area, wherein the second display area is configured to be rolled in or out based on a movement of the second housing, a plurality of bars arranged under the second display area, and a plate disposed between the second display area and the plurality of bars, and configured to support at least a portion of the second display area. The plate may include first pattern areas including patterns of shapes which are separated from each other and second pattern areas including patterns of shapes which are separated from each other. The shapes of the second pattern areas may be different from the shapes of the first pattern areas. The first pattern areas and the second pattern areas may be configured to be alternately arranged. The first pattern areas may be disposed not to face the plurality of bars, and the second pattern areas, respectively, may be disposed to face the plurality of bars.

An electronic device according to an embodiment of the disclosure may comprise a first housing, a second housing configured to move with respect to the first housing, a flexible display including a first display area and a second display area extended from the first display area, wherein the second display area is configured to be rolled in or out based on a movement of the second housing, a plurality of bars arranged under the second display area, and a plate disposed between the second display area and the plurality of bars, and configured to support at least a portion of the second display area. The plate may include first pattern areas including a plurality of openings and second pattern areas arranged alternately with the first pattern areas. Each of the plurality of bars may include an upper portion facing the plate and a lower portion opposite to the upper portion, and the upper portion may be formed so that at least a portion of an edge thereof is inclined.

According to an aspect of the present disclosure, there is provided an electronic device, comprising: a first housing (201); a second housing (202) configured to move with respect to the first housing; a flexible display (203) including a first display area (A1) and a second display area (A2) extended from the first display area, wherein the second display area is configured to be rolled in or out based on a movement of the second housing; a plurality of bars (214) arranged under the second display area; and a plate (218) disposed between the second display area and the plurality of bars, and configured to support at least a portion of the second display area, wherein the plate includes first pattern areas (410) including patterns of shapes which are separated from each other and second pattern areas (420) including patterns of shapes which are separated from each other, wherein the shapes of the second pattern areas (420) are different from the shapes of the first pattern areas (410), wherein the first pattern areas (410) and the second pattern areas (420) are configured to be alternately arranged, and wherein the first pattern areas (410)are disposed not to face the plurality of bars (214), and the second pattern areas (420), respectively, are disposed to face the plurality of bars (214).

In an embodiment, each of the first pattern areas (410) includes a plurality of openings (411), and each of the second pattern areas (420) includes a supporting portion (421) and bar-shaped protruding portions (422), wherein the supporting portion (421) is disposed to face a respective one of the plurality of bars, and wherein the bar-shaped protruding portions (422) are protruded from the supporting portion toward the flexible display in parallel to each other.

In an embodiment, the supporting portion (421) and the bar-shaped protruding portions (422) of each of the second pattern areas (420) are formed of a monolithic support body.

In an embodiment, the supporting portion (421) of each of the second pattern areas (420) is adhered to each of the plurality of bars, and the bar-shaped protruding portions (422) of each of the second pattern areas (420) are adhered to the second display area of the flexible display.

In an embodiment, the first pattern areas (410) are adhered to the second display area of the flexible display, and the first pattern areas (410) are disposed not to overlap the plurality of bars.

In an embodiment, a pattern formed by the plurality of openings of the first pattern areas (410) corresponds to a pattern formed by the bar-shaped protruding portions of the second pattern areas (420).

In an embodiment, each of the plurality of bars (214) includes an upper portion (431) facing the plate and a lower portion (432) opposite to the upper portion, and the upper portion is formed so that at least a portion of an edge thereof is inclined.

In an embodiment, each of the plurality of bars (214) includes a first surface (441) facing the second pattern area and a second surface (442) facing in a direction opposite to the first surface, and wherein a center area (441a) of the first surface is formed of a flat surface to be adhered to at least a portion of the second pattern area, and an edge area (441b) extended from the center area is inclined away from the second pattern area.

In an embodiment, a width of the center area (441a) of the first surface (441) is smaller than a width of the second surface (442).

In an embodiment, a width of each of the first pattern areas of the plate (218) and a width of each of the second pattern areas correspond to each other, and a width of each of the plurality of bars (214) is larger than an interval between the plurality of bars.

In an embodiment, a width of each of the first pattern areas of the plate (218) is larger than a width of each of the second pattern areas of the plate (218), and a width of each of the plurality of bars (214) is larger than an interval between the plurality of bars.

In an embodiment, the electronic device includes an adhesive member (510) disposed between each of the second pattern areas of the plate (218) and each of the plurality of bars.

In an embodiment, the adhesive member (510) is disposed in a center area of a lower surface of the second pattern areas, and a gap of a first length is formed between an edge area of the lower surface of the second pattern area and each of the plurality of bars.

In an embodiment, in a bending section of the flexible display, a gap of a second length smaller than the first length is formed between the edge area of the lower surface of the second pattern area and each of the plurality of bars.

In an embodiment, each of the plurality of bars (214) includes a recess (214c) recessed inward, and the adhesive member is seated in the recess.

According to an aspect of the present disclosure, there is provided an electronic device, comprising: a first housing (201); a second housing (202) configured to slide with respect to the first housing; a flexible display (203) including a first display area (A1) and a second display area (A2) extended from the first display area, and wherein the second display area is rolled in or out based on a movement of the second housing; a plurality of bars (214) arranged under the second display area; and a plate (218) disposed between the second display area and the plurality of bars and configured to support at least a portion of the second display area, wherein the plate includes first pattern areas (410) including a plurality of openings (411) and second pattern areas (420) arranged alternately with the first pattern areas, wherein each of the plurality of bars (214) includes an upper portion (431) facing the plate and a lower portion (432) opposite to the upper portion, and wherein the upper portion is formed so that at least a portion of an edge thereof is inclined.

In an embodiment, the plurality of openings (411) of each of the first pattern areas (410) are shaped as through holes, and each of the second pattern areas (420) includes a plurality of recesses, and an array of the plurality of recesses is arranged to correspond to an array of the plurality of openings.

In an embodiment, each of the second pattern areas (420) includes a supporting portion (421) and bar-shaped protruding portions (422), wherein the supporting portion (421) is disposed to face a respective one of the plurality of bars, and wherein the bar-shaped protruding portions (422) are protruded from the supporting portion toward the flexible display in parallel to each other.

In an embodiment, the supporting portion (421) of the second pattern area (420) and the bar-shaped protruding portions (422) are formed of a monolithic support body.

In an embodiment, the supporting portion (421) of the second pattern areas (420) is adhered to each of the plurality of bars, and the bar-shaped protruding portions (422) of the second pattern areas are adhered to the second display area of the flexible display.

### [Brief Description of the Drawings]

The subject-matter of the present disclosure is best understood with reference to the accompanying figures, in which:
FIG. 1 is a block diagram illustrating an electronic device in a network environment according to various embodiments of the disclosure;
FIG. 2 is a view illustrating a state in which a second display area of a display is received in a housing according to an embodiment of the disclosure;
FIG. 3 is a view illustrating a state in which a second display area of a display is exposed to the outside of a housing according to an embodiment of the disclosure;
FIGS. 4A and 4B are exploded perspective views illustrating an electronic device according to an embodiment of the disclosure;
FIG. 5A is a cross-sectional view illustrating an associated configuration of a gear connected with a motor and a rack in a closed state of an electronic device according to an embodiment of the disclosure;
FIG. 5B is a cross-sectional view illustrating an arrangement relationship between a motor and a battery in a closed state of an electronic device according to an embodiment of the disclosure;
FIG. 6A is a cross-sectional view illustrating an associated configuration of a gear connected with a motor and a rack in an open state of an electronic device according to an embodiment of the disclosure;
FIG. 6B is a cross-sectional view illustrating an arrangement relationship between a motor and a battery in an open state of an electronic device according to an embodiment of the disclosure;
FIG. 7A is a perspective view illustrating a state of a supporting structure in a closed state of an electronic device according to various embodiments of the disclosure;
FIG. 7B is a perspective view illustrating a state of a supporting structure in an opened state of an electronic device according to various embodiments of the disclosure;
FIG. 8 is a view illustrating a stacked structure between a display, a supporting structure, and a plurality of bars according to an embodiment of the disclosure;
FIG. 9A is a view illustrating a front surface of a plate according to an embodiment of the disclosure;
FIG. 9B is an enlarged view illustrating an area of FIG. 9A according to an embodiment of the disclosure;
FIG. 10A is a view illustrating a front surface of a plate according to an embodiment of the disclosure;
FIG. 10B is an enlarged view illustrating an area of FIG. 10A according to an embodiment of the disclosure;
FIG. 11 is a cross-sectional view illustrating a shape of a plurality of bars attached and a plate according to an embodiment of the disclosure;
FIG. 12 is a cross-sectional view illustrating an arrangement of a plurality of bars positioned in a bending section when a display bends according to an embodiment of the disclosure;
FIG. 13 is a cross-sectional view illustrating a shape of a plurality of bars attached and a plate according to an embodiment of the disclosure;
FIG. 14 is a cross-sectional view illustrating an arrangement of a plurality of bars positioned in a bending section when a display bends according to an embodiment of the disclosure;
FIG. 15 is a cross-sectional view illustrating a shape of a plurality of bars attached and a plate according to an embodiment of the disclosure;
FIG. 16 is a cross-sectional view illustrating an arrangement of a plurality of bars positioned in a bending section when a display bends according to an embodiment of the disclosure; and
FIG. 17 is a cross-sectional view illustrating a shape of a plurality of bars attached and a plate according to an embodiment of the disclosure.

### [Mode for the Invention]

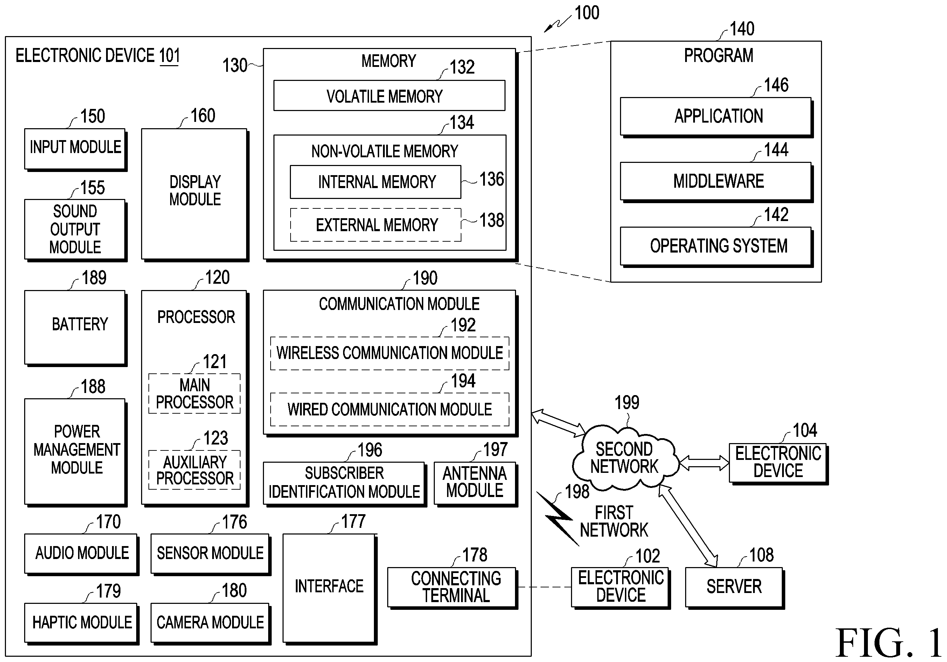

FIG. 1 is a block diagram illustrating an electronic device in a network environment according to various embodiments of the disclosure.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal According to an embodiment, the display module 160 may include a first display module 351 corresponding to the user's left eye and/or a second display module 353 corresponding to the user's right eye., a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via a first network 198 (e.g., a short-range communication network, such as BluetoothTM, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

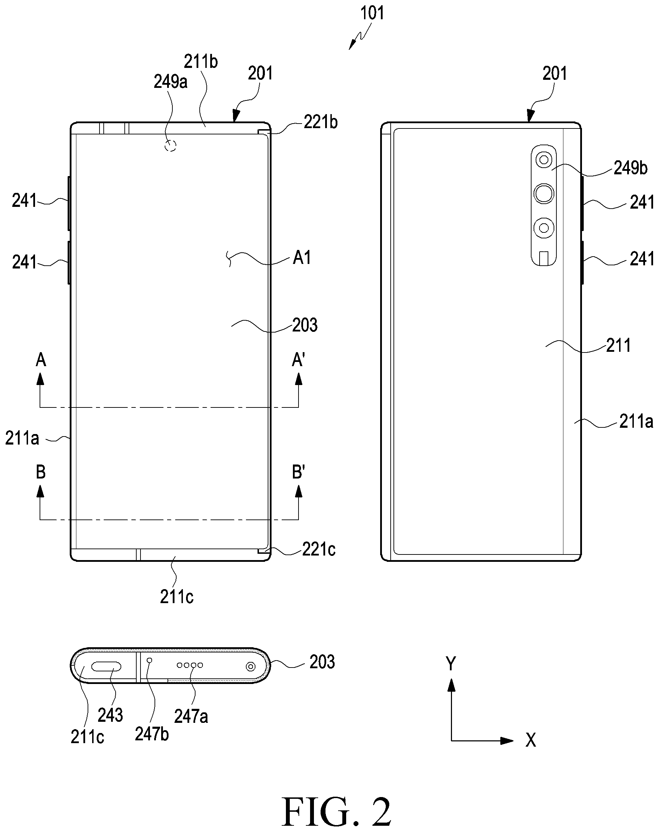

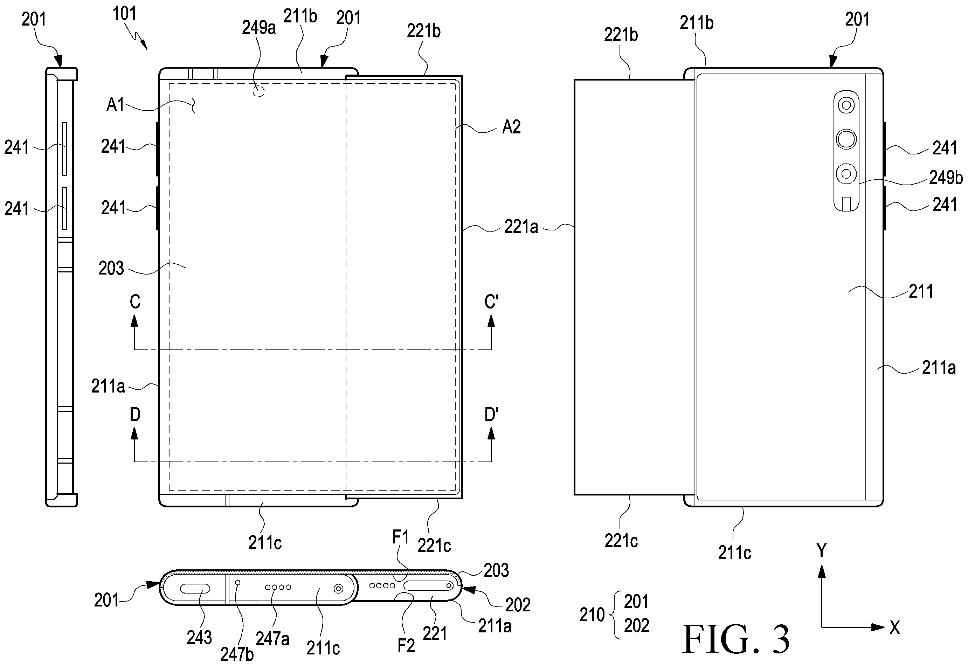

Referring to FIGS. 2 and 3, an electronic device 101 (e.g., the electronic device 101 of FIG. 1) may include a housing 210.[ The housing 210 may include a first housing 201 and a second housing 202 that is movable relative to the first housing 201. According to an embodiment, the electronic device 101 may be interpreted as having a structure in which the first housing 201 is slidable with respect to the second housing 202. According to an embodiment, the second housing 202 may perform a reciprocating or corresponding motion by sliding a predetermined distance in the shown direction (e.g., the X direction of FIGs 2 and 3) with respect to the first housing 201

FIG. 2 shows the electronic device 101 in a state in which a second display area (e.g., the display area A2 of FIG. 3) of a display is received in the housing. FIG. 3 shows the electronic device 101 in a state in which the second display area A2 of the display 203 is exposed, i.e., the second area A2 is outside of the housing.

FIGS. 2 and 3 illustrate a structure in which the display 203 (e.g., flexible display or rollable display) is extendable in a right direction (e.g., +X direction) when the electronic device 101 is viewed from the front. However, the extending direction of the display 203 is not limited to one direction (e.g., +X direction). For example, the extending direction of the display 203 may be configured such that the display 203 is extendable in the upwards direction (e.g., +Y direction), left direction (e.g., -X direction), and/or downwards direction (e.g., -Y direction). Advantageously, flexible displays, such as extendable, foldable or rollable displays improve portability and user convenience.

The state illustrated in FIG. 2 may be referred to as a slid-in state of the electronic device 101 or a closed state (e.g., rolled-in state) of the second display area A2 of the display 203.

The state illustrated in FIG. 3 may be referred to as a slid-out state of the electronic device 101 or an open state (e.g., rolled-out state) of the second display area A2 of the display 203.

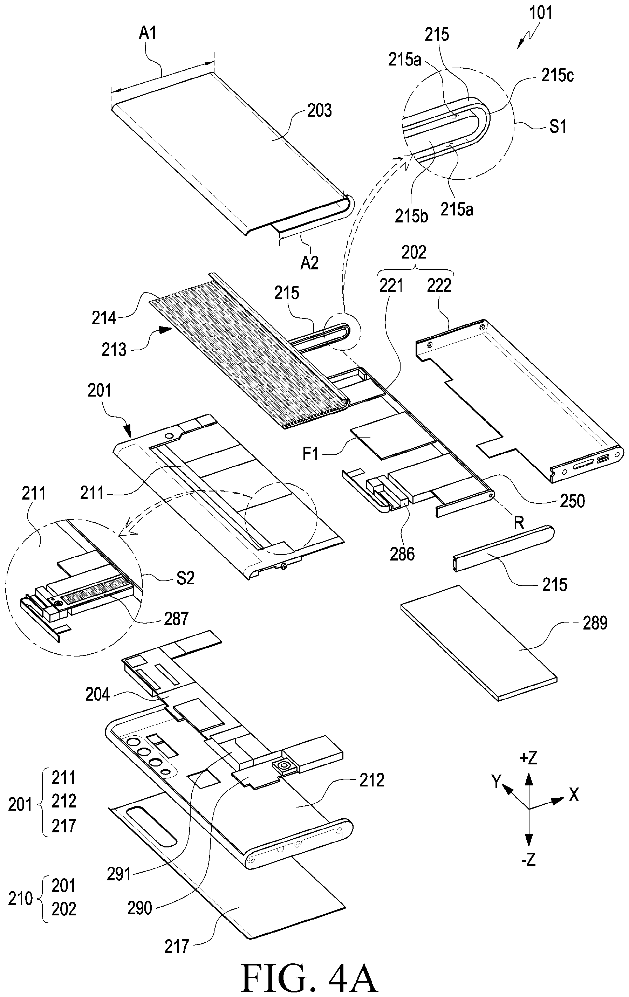

The embodiments of FIGS. 2 and 3 may be combined with the embodiment of FIG. 1 or the embodiments of FIGS. 4A to 17.

According to an embodiment, the second housing 202 may be referred to as a slide portion or a slide housing, and may be movable relative to the first housing 201. According to an embodiment, the second housing 202 may receive various electrical and electronic components, such as a circuit board or a battery. When the electronic device 101 is in the slid-in state, the second housing 202 may be defined as being in a retracted position, and when the electronic device 101 is in the slid-out state, the second housing 202 may be defined as being in an extended position.

According to an embodiment, the slid-in state of the electronic device 101 (or the slid-out state of the electronic device 101) may be changed into the slid-out state of the electronic device 101 (or the slid-in state of the electronic device 101) based on a defined user input. For example, the slid-in state of the electronic device 101 (or the slid-out state of the electronic device 101) may be changed into the slid-out state (or the slid-in state of the electronic device 101) in response to a user input to a physical button exposed through a portion of the first housing 201 or a portion of the second housing 202. For example, the slid-in state (or the slid-out state of the electronic device 101) may be changed into the slid-out state (or the slid-in state of the electronic device 101) in response to a touch input to an executable object displayed in the screen display area (e.g., the first display area A1). For example, the slid-in state (or the slid-out state of the electronic device 101) may be changed into the slid-out state (or the slid-in state of the electronic device 101) in response to a touch input having a pressing strength of a reference strength or more at a contact point on the screen display area (e.g., the first display area A1). For example, the slid-in state (or the slid-out state of the electronic device 101) may be changed into the slid-out state (or the slid-in state of the electronic device 101) in response to a voice input received through the microphone of the electronic device 101. For example, the slid-in state (or the slid-out state of the electronic device 101) may be changed into the slid-out state (or the slid-in state of the electronic device 101) in response to an external force applied to the first housing 201 and/or the second housing 202 to move the second housing 202 with respect to the first housing 201. For example, the slid-in state (or the slid-out state of the electronic device 101) may be changed into the slid-out state (or the slid-in state of the electronic device 101) in response to a user input identified from an external electronic device (e.g., earbuds or a smart watch) connected with the electronic device 101. However, the slide in-out operations of the electronic device 101 are not limited thereto.

According to an embodiment, the first housing 201 may house an actuator (e.g., motor structure), a speaker, a SIM socket, and/or a sub circuit board (e.g., second circuit board) electrically connected with a main circuit board (e.g., first circuit board). The second housing 202 may receive the main circuit board on which electric components, such as an application processor (AP) and a communication processor (CP) are mounted. According to an embodiment, the second housing 202 may receive the actuator (e.g., motor structure), speaker, SIM socket, and/or the sub circuit board electrically connected with the main circuit board, and the first housing 201 may receive the main circuit board where electrical components, such as an application processor (AP) or a communication processor (CP), are mounted. According to an embodiment, both the sub circuit board and the main circuit board may be disposed in the first housing 201 or the second housing 202.

According to an embodiment, the first housing 201 may include a first plate 211 (e.g., the first plate cover 212 of FIG. 4A). The first plate 211 may include a first sidewall 211a, a second sidewall 211b extending from the first sidewall 211a, and a third sidewall 211c extending from the first sidewall 211a and substantially parallel to the second sidewall 211b. According to an embodiment, the second sidewall 211b and the third sidewall 211c may be formed substantially perpendicular to the first sidewall 211a.

According to an embodiment, the first sidewall 211a, second sidewall 211b, and third sidewall 211c of the first plate 211 may be formed to have a side opening (e.g., front opening) to receive (or surround) at least a portion of the second housing 202. For example, at least a portion of the second housing 202 may be surrounded by the first housing 201 and be slid in the direction parallel to a first surface (e.g., the first surface F1 of the second housing of FIG. 4A), e.g., in the shown direction (e.g., X direction of FIGS. 2 and 3)arrow ① direction, while being guided by the first housing 201. According to an embodiment, the first sidewall 211a, the second sidewall 211b, and/or the third sidewall 211c of the first plate 211 may be integrally formed. According to an embodiment, the first sidewall 211a, the second sidewall 211b, and/or the third sidewall 211c of the first plate 211 may be formed as separate structures and be combined or assembled.

According to an embodiment, the first plate 211 may be formed to surround at least a portion of the display 203. For example, at least a portion of the display 203 may be formed to be surrounded by the first sidewall 211a, the second sidewall 211b, and/or the third sidewall 211c of the first plate 211.

According to an embodiment, the second housing 202 may include a second slide cover 221 (e.g., a slide plate). The second slide cover 221 may have a plate shape and include the first surface (e.g., the first surface F1 of FIG. 4A) supporting internal components. For example, the second slide cover 221 may support at least a portion of the display 203 (e.g., the first display area A1). According to an embodiment, the second slide cover 221 may be referred to as a front cover.

According to an embodiment, the second slide cover 221 may include a first sidewall 221a, a second sidewall 221b extending from the first sidewall 221a, and a third sidewall 221c extending from the first sidewall 221a and substantially parallel to the second sidewall 221b. According to an embodiment, the second sidewall 221b and the third sidewall 221c may be formed substantially perpendicular to the first sidewall 221a.

According to various embodiments, as the second housing 202 moves in a first direction (e.g., X direction) parallel to the second sidewall 221b or the third sidewall 221c, the slid-in state and slid-out state of the electronic device 101 may be formed. In the slid-in state of the electronic device 101, the second housing 202 may be positioned at a first distance from the first sidewall 211a of the first housing 201. In the slid-out state of the electronic device 101, the second housing 202 may move to be positioned at a second distance larger than the first distance from the first sidewall 211a of the first housing 201. In an embodiment, in the slid-in state of the electronic device 101, the first housing 201 may be formed to surround a portion of the second sidewall 221b and the third sidewall 221c.

According to an embodiment, the electronic device 101 may have an intermediate state between the slid-in state (e.g., fully closed state) of FIG. 2 and the slid-out state (e.g., fully opened state) of FIG. 3. The distance between the first sidewall 211a and the first sidewall 221a in the intermediate state of the electronic device 101 may be shorter than the distance between the first sidewall 211a and the first sidewall 221a of the electronic device 101 in the fully opened state and be longer than the distance between the first sidewall 211a and the first sidewall 221a of the electronic device 101 in the fully closed state. According to an embodiment, as at least a portion of the display 203 slides in the intermediate state of the electronic device 101, the total display area exposed to the outside may vary. For example, in the intermediate state of the electronic device 101, the ratio of the width (length in the X direction) to the height (length in the Y direction) of the display 203 and/or the distance between the first sidewall 211a of the first housing 201 and the first sidewall 221a of the second housing 202 may be changed based on the sliding in/out of the electronic device 101.

According to an embodiment, the electronic device 101 may include a display 203, a key input device 241, an external connector hole 243, audio modules 247a and 247b, or camera modules 249a and 249b. According to an embodiment, the electronic device 101 may further include an indicator (e.g., a light emitting diode (LED) device) or various sensor modules.

According to an embodiment, the display 203 may be formed so that the size of a portion of the housing 210, which may be viewed from the front, is changed based on the slide of the second housing 202. According to an embodiment, the display 203 may include the first display area A1 and the second display area A2 that is configured to be exposed to the outside of the electronic device 101 based on the slide of the second housing 202.

According to an embodiment, the first display area A1 may be disposed on the second housing 202. For example, the first display area A1 may be disposed on the second slide cover 221 of the second housing 202. According to an embodiment, the second display area A2 may extend from the first display area A1, and the second display area A2 may be received in, or visually exposed to the outside of, the first housing 201 as the second housing 202 moves relative to the first housing 201. According to an embodiment, as the electronic device 101 changes from the slid-in state to slid-out state, the display 203 may extend in the right direction (e.g., +X direction) of the electronic device 101. For example, in the slid-out state of the electronic device 101, the second display area A2 may be visually exposed from the left side (e.g., -X direction) of the display 203. According to an embodiment, as the electronic device 101 changes from the slid-in state to slid-out state, the display 203 may extend in the left direction (e.g., -X direction) of the electronic device 101. For example, in the slid-out state of the electronic device 101, the second display area A2 may be visually exposed from the right side (e.g., +X direction) of the display 203.

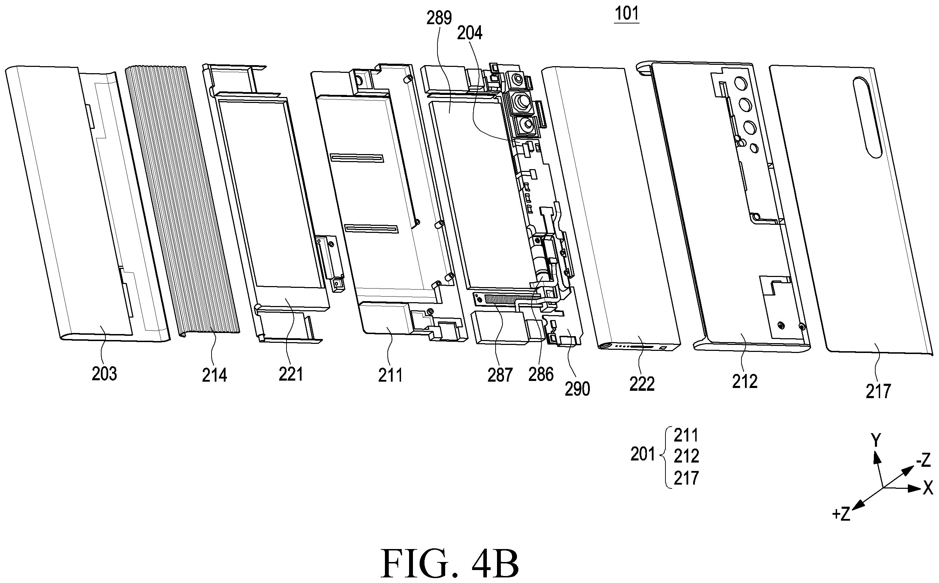

According to an embodiment, the second display area A2 may be received (e.g., rolled-in) in the space positioned inside the first housing 201 or exposed (e.g., rolled-out) to the outside of the electronic device while being substantially guided by one area (e.g., by the curved surface 250 of FIG. 4) of the housing 210. According to an embodiment, the second display area A2 may move based on a slide of the second housing 202 in the first direction (e.g., X direction). For example, while the second housing 202 slides, a portion of the second display area A2 may be deformed into a curved shape in a position corresponding to the curved surface 250 of the housing 210.

According to an embodiment, as viewed from above the second slide cover 221 (e.g., front cover), if the electronic device 101 changes from the slid-in state to slid-out state (e.g., if the second housing 202 slides to extend from the first housing 201), the second display area A2 may be gradually exposed (e.g., shown) to the outside and, together with the first display area A1, form a substantially flat surface. According to an embodiment, the display 203 may be coupled with or disposed adjacent to a touch detection circuit, a pressure sensor capable of measuring the strength (pressure) of touches, and/or a digitizer for detecting a magnetic field-type stylus pen. According to an embodiment, irrespective of the slid-in state or slid-out state of the electronic device 101, the exposed portion of the second display area A2 may be positioned on a portion (e.g., the curved surface 250 of FIG. 4A) of the second housing, and a portion of the second display area A2 may remain in the curved shape in the position corresponding to the curved surface 250.

According to an embodiment, the key input device 241 may be positioned in an area of the housing 210 (e.g., the first housing 201 and/or second housing 202). Depending on the appearance and the state of use, the electronic device 101 may be designed to omit the illustrated key input device 241 or to include additional key input device(s). According to an embodiment, the electronic device 101 may include a key input device (not shown), e.g., a home key button or a touchpad disposed around the home key button. According to an embodiment, at least a portion of the key input device 241 may be disposed on the first sidewall 211a, the second sidewall 211b, or the third sidewall 211c of the first housing 201. According to an embodiment, at least a portion of the key input device 241 may be disposed on the first sidewall 221a, the second sidewall 221b, and/or the third sidewall 221c of the second housing 202.

According to an embodiment, the external connector hole 243 may be omitted or may receive a connector (e.g., a universal serial bus (USB) connector) for transmitting and receiving power and/or data with an external electronic device. According to an embodiment (not shown), the electronic device 101 may include a plurality of external connector holes 243, and some of the plurality of external connector holes 243 may function as external connector holes for transmitting/receiving audio signals with an external electronic device. In the illustrated embodiment, the external connector hole 243 is disposed in the second housing 202, but is not limited thereto. For example, the external connector hole 243 or an external connector hole not shown may be disposed in the first housing 201.

According to an embodiment, the audio modules 247a and 247b may include at least one speaker hole 247a or at least one microphone hole 247b. One of the speaker holes 247b may be provided as a receiver hole for voice calls, and the other may be provided as an external speaker hole. The electronic device 101 may include a microphone for obtaining sound. The microphone may obtain external sound of the electronic device 101 through the microphone hole 247b. According to an embodiment, the electronic device 101 may include a plurality of microphones to detect the direction of sound. According to an embodiment, the electronic device 101 may include an audio module in which the speaker hole 247a and the microphone hole 247b are implemented as one hole or may include a speaker without the speaker hole 247a (e.g., a piezo speaker). According to an embodiment, the speaker hole 247a and the microphone hole 247b may be positioned in the first housing 201 and/or the second housing 202.

According to an embodiment, the camera modules 249a and 249b may include a first camera module 249a (e.g., front camera) and/or a second camera module 249b (e.g., rear camera). According to an embodiment, the electronic device 101 may include at least one of a wide-angle camera, a telephoto camera, or a close-up camera. According to an embodiment, the electronic device 200 may measure the distance to the subject by including an infrared projector and/or an infrared receiver. The camera modules 249a and 249b may include one or more lenses, an image sensor, and/or an image signal processor. The first camera module 249a may be disposed to face in the same direction as the display 203. For example, the first camera module 249a may be disposed in an area around the first display area A1 or overlapping the display 203. When disposed in the area overlapping the display 203, the first camera module 249a may capture the subject through the display 203. According to an embodiment, the first camera module 249a may include an under display camera (UDC) that has a screen display area (e.g., the first display area A1) that may not be visually exposed but hidden. According to an embodiment, the second camera module 249b may capture the subject in a direction opposite to the first display area A1. According to an embodiment, the first camera module 249a and/or the second camera module 249b may be disposed on the second housing 202. According to an embodiment, a plurality of second camera modules 249b may be formed to provide various arrays. For example, the plurality of second camera modules 249b may be arranged along a width direction (Y-axis direction) that is substantially perpendicular to the sliding direction (e.g., X-axis direction) of the electronic device 101. According to an embodiment, the plurality of second camera modules 249b may be arranged along the sliding direction (e.g., X-axis direction) of the electronic device 101. According to an embodiment, the plurality of second camera modules 249b may be arranged along N * M rows and columns like a matrix.

According to an embodiment, the second camera module 249b is not visually exposed to the outside of the electronic device 101 in the slid-in state of the electronic device 101 and, in the slid-out state of the electronic device 101, may capture the outside of the electronic device 101. According to an embodiment, the second camera module 249b may capture the outside of the electronic device 101 in the slid-in state and/or slid-out state of the electronic device 101. For example, at least a portion (e.g., the first rear plate 215 and/or the second rear plate 225 of FIG. 4) of the housing 210 may be substantially transparent. The second camera module 249b may capture the outside of the electronic device 101 through the first rear plate 215 and/or the second rear plate 225. According to an embodiment, the second camera module 249b may be visually exposed to the outside of the electronic device 101 to capture the outside of the electronic device 101 in the slid-in state and slid-out state of the electronic device 101. For example, the first housing 201 (e.g., the first rear plate 215 of FIG. 4) may include an opening for the second camera module 249b.

According to an embodiment, an indicator (not shown) of the electronic device 101 may be disposed on the first housing 201 or the second housing 202, and the indicator may include a light emitting diode to provide state information about the electronic device 101 as a visual signal. The sensor module (not shown) of the electronic device 101 may produce an electrical signal or data value corresponding to the internal operation state or external environment state of the electronic device. The sensor module may include a proximity sensor, a fingerprint sensor, and/or a biometric sensor (e.g., an iris/face recognition sensor or a heartrate monitor (HRM) sensor). In an embodiment, the sensor module may further include at least one of a gesture sensor, a gyro sensor, an atmospheric pressure sensor, a magnetic sensor, an acceleration sensor, a grip sensor, a color sensor, an infrared (IR) sensor, a temperature sensor, a humidity sensor, or an illuminance sensor. According to an embodiment, the sensor module may be disposed in the first housing 201 and/or the second housing 202.

FIGS. 4A and 4B are exploded perspective views illustrating an electronic device according to an embodiment of the disclosure.

Referring to FIGS. 4A and 4B, the electronic device 101 may include a first housing 201, a second housing 202, a display 203 (e.g., a flexible display, a foldable display, or a rollable display), and/or a supporting structure 213 (e.g., an articulated hinge structure or multi-bar structure). A portion (e.g., the second display area A2) of the display 203 may be received in the electronic device 101 along the curved surface 250 of the second housing 202.

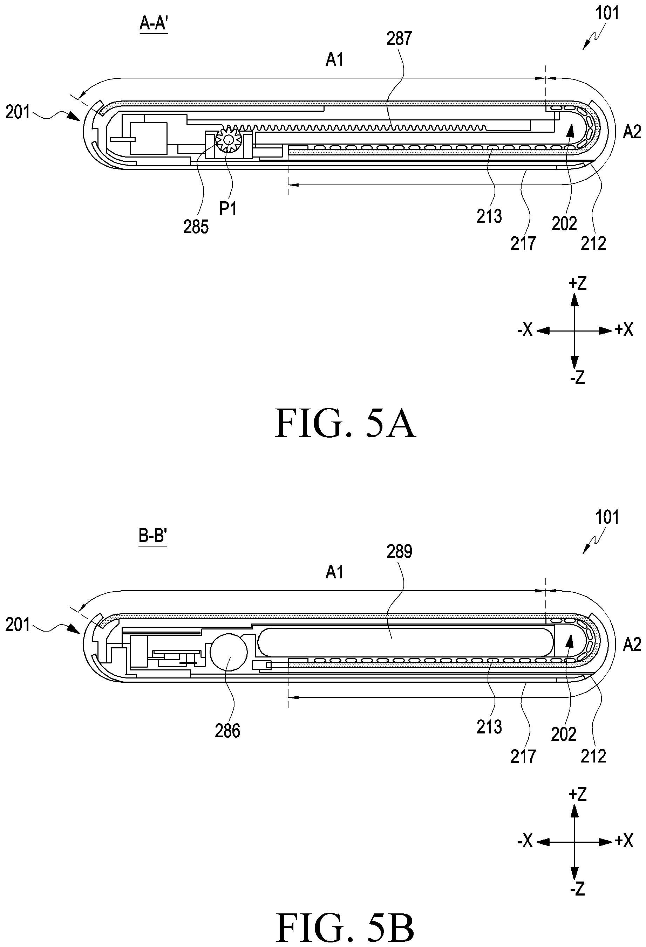

The configuration of the first housing 201, the second housing 202, and the display 203 of FIGS. 4A and 4B may be identical in whole or part to the configuration of the first housing 201, the second housing 202, and the display 203 of FIGS. 2 and 3. The embodiments of FIGS. 4A and 4B may be at least partially combined with the embodiments of FIGS. 1 to 3, or the embodiments of FIGS. 5A to 17.

According to an embodiment, the first housing 201 may include a first plate 211, a first plate cover 212, and a third plate 217. The first plate 211 may support the entire electronic device 101. The first plate 211 may be disposed on one surface of the second plate 221, and the printed circuit board 204 may be coupled to the other surface of the first plate 211. According to an embodiment, the first plate 211 may receive components (e.g., the battery 289 (e.g., the battery 189 of FIG. 1) and the circuit board 204) of the electronic device 101. The first plate cover 212 may protect various components positioned on the second plate 221.

According to an embodiment, a plurality of substrates may be received in the first housing 201. A processor, memory, and/or interface may be mounted on the circuit board 204 which is the main board. The processor may include one or more of, e.g., a central processing unit, an application processor, a graphic processing device, an image signal processing, a sensor hub processor, or a communication processor. According to various embodiments, the circuit board 204 may include a flexible printed circuit board type radio frequency cable (FRC). For example, the circuit board 204 may be disposed on at least a portion of the first plate 211 and may be electrically connected with an antenna module (e.g., the antenna module 197 of FIG. 1) and a communication module (e.g., the communication module 190 of FIG. 1).

According to an embodiment, the memory may include, e.g., a volatile or non-volatile memory.

According to an embodiment, the interface may include, e.g., a high definition multimedia interface (HDMI), a universal serial bus (USB) interface, a secure digital (SD) card interface, and/or an audio interface. The interface may electrically or physically connect, e.g., the electronic device 101 with an external electronic device and may include a USB connector, an SD card/multimedia card (MMC) connector, or an audio connector.

According to an embodiment, the electronic device 101 may further include a separate sub circuit board 290 spaced apart from the circuit board 240 in the first housing 201. The sub circuit board 290 may be electrically connected with the circuit board 240 through the flexible circuit board 291. The sub circuit board 290 may be electrically connected with electrical components disposed in an end area of the electronic device, such as the battery 289 or a speaker and/or a SIM socket, and may transfer signals and power.

According to an embodiment, the battery 289 may be a device for supplying power to at least one component of the electronic device 101. The battery 189 may include, e.g., a primary cell which is not rechargeable, a secondary cell which is rechargeable, or a fuel cell. At least a portion of the battery 289 may be disposed on substantially the same plane as the circuit board 204. The battery 289 may be integrally or detachably disposed inside the electronic device 101.

According to an embodiment, the battery 289 may be formed of a single embedded battery or may include a plurality of removable batteries. For example, when the embedded battery is positioned on the second plate 221, the embedded battery may move as the second plate 221 slides.

According to various embodiments, the third plate 217 may substantially form at least a portion of the exterior of the first housing 201 or the electronic device 101. For example, the third plate 217 may be coupled to the outer surface of the first plate cover 212. According to an embodiment, the third plate 217 may be integrally formed with the first plate cover 212. According to an embodiment, the third plate 217 may provide a decorative effect on the exterior of the electronic device 101. The first plate 211 and the first plate cover 212 may be formed of at least one of a metal or a polymer, and the third plate 217 may be formed of at least one of metal, glass, synthetic resin or ceramic. According to an embodiment, the first plate 211, the first plate cover 212 and/or the third plate 217 may be formed of a material that transmits light at least partially (e.g., the auxiliary display area). For example, in a state in which a portion of the display 203 (e.g., the second display area A2) is received in the electronic device 101, the electronic device 101 may output visual information using the second display area A2. The auxiliary display area may be a portion of the first plate 211, the first plate cover 212, and/or the third plate 217 in which the display 203 received in the second housing 202 is positioned.

According to an embodiment, the second housing 202 may include a second plate 221 and a slide cover 222. The second plate 221 and the slide cover 222 may be mounted (e.g., at least partially connected) on the second housing 201 and be moved in one direction (e.g., X direction in FIGS. 2 and 3) while being guided by the first housing 201. According to an embodiment, the second plate 221 may support the display 203. For example, the second plate 221 may include a first surface F1. The first display area A1 of the display 203 may be substantially positioned on the first surface F1 to maintain a flat panel shape. The slide cover 222 may protect the display 203 positioned on the second plate 221. For example, at least a portion of the display 203 may be positioned between the second plate 221 and the slide cover 222. According to an embodiment, the second plate 221 and the slide cover 222 may be formed of a metal material and/or a non-metal (e.g., polymer) material. According to an embodiment, the first plate 221 may receive at least some (e.g., the battery 289 (e.g., the battery 189 of FIG. 2), driving motor 286, and rack 287) of the components of the electronic device 101.

According to an embodiment, the supporting structure 213 may be connected with the first housing 201. For example, the supporting structure 213 may be positioned between the first plate 211 and the slide cover 222. According to an embodiment, as the first housing 201 slides, the supporting structure 213 may move with respect to the second housing 202. In the closed state (e.g., FIG. 2) of the supporting structure 213, most of the structure may be received in the second housing 202. According to an embodiment, at least a portion of the supporting structure 213 may move corresponding to the curved surface 250 positioned at the edge of the second housing 202.

According to an embodiment, the supporting structure 213 may include a plurality of bars or rods 214 and a guide rail 215. The plurality of bars 214 may extend in a straight line and be disposed parallel to the rotational axis R formed by the curved surface 250, and the plurality of rods 214 may be arranged along a direction substantially perpendicular to the rotational axis R (e.g., the direction along which the second housing 202 slides).

According to an embodiment, the guide rail 215 may guide the movement of the plurality of bars 214. The guide rail 215 may include an upper guide rail coupled with an upper end of the second plate 221 and connected with upper ends of the plurality of bars 214 and a lower guide rail coupled with a lower end of the second plate 221 and connected with lower ends of the plurality of bars 214. According to an embodiment, referring to a first enlarged area S 1 of FIG. 4A, when the plurality of bars 214 are bent or slid while moving along the curved surface 250, the upper ends and/or lower ends of the plurality of bars 214 may be moved while remaining fitted into the guide rail 215. For example, the plurality of bars 214 may be slid along the groove-shape rail 215a formed inside the guide rail 215, with their upper ends and/or lower ends fitted into the rail 215a.

According to an embodiment, the second plate 221 on which the motor structure 286 is disposed may be slid out by driving the motor structure 286 (e.g., driving for sliding out the display). For example, in the slide-out operation, the second plate 221 may be moved in the first direction (+X direction), and the protruding portion 215b inside the guide rail 215 connected to the second plate 221 may provide pressure to the upper end portion (e.g., the end portion in the +Y direction) and/or the lower end portion (e.g., the end portion in the -Y direction) of the plurality of bent bars 214. According to an embodiment, when the second plate 221 moves in the first direction (+X direction), the curved surface 250 of the second plate 221, along with the guide rail 215, may provide pressure to the supporting structure 213 (e.g., articulated hinge structure or multi-bar structure), thus causing the supporting structure 213 to bend. Accordingly, the display 203 received between the second plate 221 and the slide cover 222 may be extended to the front.

According to an embodiment, the second plate 221 on which the motor structure 286 is disposed may be slid in by driving the motor structure 286 (e.g., driving for sliding in the display). For example, in the slide-in operation, the second plate 221 may move in the second direction (-X direction), and the outer portion 215c (e.g., a portion other than the protruding portion 215b) of the guide rail 215 connected to the second plate 221 may provide pressure to the upper end portion and/or lower end portion of the plurality of bent bars 214, thus causing them to bend. Accordingly, the extended display 203 may be received between the second plate 221 and the slide cover 222.

According to an embodiment, the structure or housing connected with the rack 287 may differ from the structure or housing connected with the motor structure 286. According to an embodiment, the rack 287 may be disposed in the first housing 201, and the motor structure 286 may be disposed in the second housing 202. The second enlarged area S2 of FIG. 4A represents the rear surface (e.g., the surface facing the -Z axis) of the first plate 211. Referring to the second enlarged area S2, the rack 287 may be disposed on one surface (e.g., one surface facing in the -Z direction) of the first plate 211 of the first housing 201. The rack 287 may be configured to be engaged with the gear (e.g., the gear 285 of FIG. 5A) connected to the motor structure 286 and, when the gear 285 is rotated, may, along with the first plate 211, move along the sliding direction (e.g., X-axis direction) of the electronic device 101. As the driving force generated from the motor structure 286 is transferred to the rack 287, the housing 210 may be slid and/or the display 203 may be enlarged or shrunken. According to an embodiment (not shown), the rack 287 may be disposed in the first housing 201, and the motor structure 286 may be disposed in the first housing 201. In an example, the rack 287 may be fixedly disposed on the second plate 221 of the second housing 202 and be rotated with the gear connected to the motor structure 286 disposed on the first plate 211 of the first housing 201 while sliding.

FIG. 5A is a cross-sectional view illustrating an associated configuration of a gear connected with a motor and a rack in a closed state of an electronic device according to an embodiment of the disclosure.

FIG. 5B is a cross-sectional view illustrating an arrangement relationship between a motor and a battery in a closed state of an electronic device according to an embodiment of the disclosure. For example, FIG. 5A is a cross-sectional view taken line A-A' of FIG. 2, and FIG. 5B is a cross-sectional view taken along line B-B' of FIG. 2.

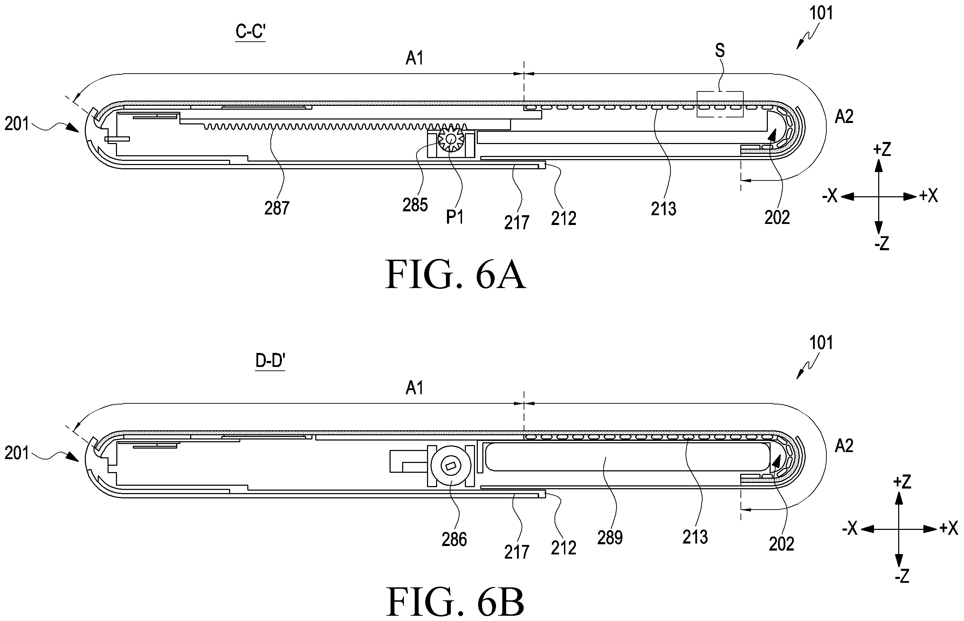

FIG. 6A is a cross-sectional view illustrating an associated configuration of a gear connected with a motor and a rack in an open state of an electronic device according to an embodiment of the disclosure.

FIG. 6B is a cross-sectional view illustrating an arrangement relationship between a motor and a battery in an open state of an electronic device according to an embodiment of the disclosure. For example, FIG. 6A is a cross-sectional view taken line C-C' of FIG. 3, and FIG. 6B is a cross-sectional view taken along line D-D' of FIG. 3.

According to an embodiment, the electronic device 101 may include a first housing 201, a second housing 202, a display 203, and a driving structure (e.g., the rack 287 and the motor structure 286). The electronic device 101 may further include various components (e.g., a camera module and a battery) disposed in the first housing 201 or the second housing 202.

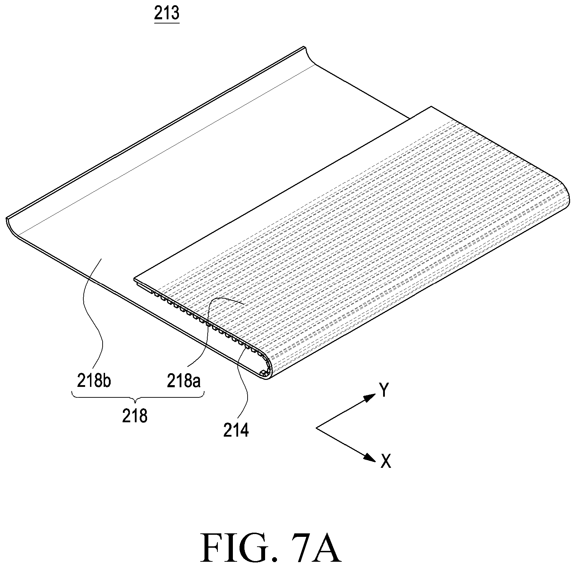

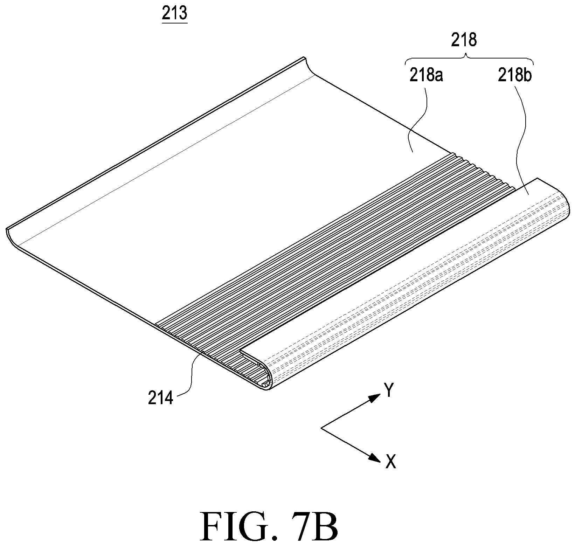

The configuration of the first housing 201 and the second housing 202 of FIGS. 5A to 6B may be identical in whole or part to the configuration of the first housing 201 and the second housing 202 of FIGS. 2 to 4B. The embodiments of FIGS. 5A to 6B may be at least partially combined with the embodiments of FIGS. 1 to 4B or the embodiments of FIGS. 7 to 17.

According to an embodiment, as the second housing 202 (and the flexible display 203 connected to the second housing 202) slides in/out with respect to the first housing 201, the second housing 202 may be in a closed state or an open state.

According to an embodiment, the electronic device 101 may include a driving structure for automatically or semi-automatically providing a slide-in/out operation of the display 203. For example, when the user presses an open trigger button (e.g., the key input device 241 of FIG. 2) exposed outside the electronic device 101, the display 203 may automatically slide in or out (automatic operation). For example, when the user slides out the display 203 by pushing the display 203 of the electronic device 101 up to a designated section, for the remaining section, it may be completely slid out by the force of the elastic member mounted in the electronic device 101 (semi-automatic operation). The slide-in operation of the electronic device 101 may also be performed to correspond to the slide-out operation (semi-automatic operation).

According to an embodiment, the driving structure may include a motor structure 286, a gear 285 mounted on an end portion of the motor structure 286, a rack 287, and a connection substrate (not shown) electrically connected to the motor structure 286. According to an embodiment, the gear 285 may be a pinion gear. According to an embodiment, the rack 287 may be engaged with the gear 285. For example, the gear 285 may rotate based on the rotation of the motor structure 286, and the rack 287 may receive at least a portion of the driving force generated by the motor structure 286 through the gear 285.

According to an embodiment, the motor structure 286 may be disposed in the second housing 202 to be slidable with respect to the first housing 201. The motor structure 286 may transfer a driving force to the gear 285 connected to the end portion.

According to an embodiment, the motor structure 286 may be disposed not to overlap the second display area A2 of the display 203. For example, the axis P1 of the motor structure 286 may be disposed perpendicular to the sliding direction, and one surface of the motor structure 286 facing in the +Z-axis direction may overlap the first display area A1, but one surface of the motor structure 286 facing in the -Z-axis direction may not overlap the second display area A2 regardless of the slid-in/out state of the display 203. One surface of the motor structure 286 facing in the -Z-axis direction may face the second housing 202 in the slid-in state of the display 203, and may face the first housing 201 in the slid-out state of the display 203. According to an embodiment, the motor structure 286 may be disposed in parallel with at least a portion of the battery 289, and may be electrically connected to the connection substrate disposed adjacent thereto.

According to an embodiment, the rack 287 may be disposed in the first housing 201 and guide the slide of the second housing 202 and the display 203. The rack 287 may be fixedly disposed on one surface (e.g., one surface facing the -Z-axis) of the first plate 211 of the first housing 201, and may guide the gear 285 to move while rotating in the sliding direction. At least a portion of one surface of the rack 287 facing in the -Z-axis direction may face the second display area A2 in the slid-in state of the display 203, and may not face the second display area A2 in the slid-out state of the display 203. According to an embodiment, the rack 287 may be disposed not to overlap the battery 289. For example, a detachable battery may be disposed in the electronic device 101, and the rack 287 may be positioned between the batteries when viewed toward the rear surface.

According to an embodiment, the gear 285 may be positioned on the axis P1 of the motor structure 286, and may slide the second housing 202 and the display 203 while rotating along the rack 287. When the second housing 202 slides due to the rotation of the gear 285, an electrical component (hereinafter, referred to as a second electrical component) disposed in the second housing 202 may also slide. For example, the second electrical component may be at least one of the motor structure 286, components disposed on a connection substrate (not shown), a speaker, or a SIM socket. According to an embodiment, the second electrical component may be the battery 289. The battery may be a detachable battery. The battery may be one of a plurality of batteries. If the battery 289 is a detachable battery, it may be at least one of the detachable batteries.

According to an embodiment, the connection substrate may be disposed adjacent to the motor structure 286 and/or the rack 287 in the second housing 202. The connection substrate may be a component to be electrically connected to the main circuit board (e.g., the circuit board 204 of FIG. 4A) disposed in the first housing 201. The main circuit board may receive an electrical structure (e.g., a processor) to control driving of the motor structure 286 or to provide power to the motor structure 286. The connection substrate may be electrically connected to the main circuit board 204 to control driving of the motor structure 286 or transfer a signal for controlling power. According to an embodiment, the connection substrate and the main circuit board 204 may be rigid boards, and the electronic device 101 may further include a separate connection FPCB for connecting the connection substrate and the main circuit board 204. According to an embodiment, the power of the battery 289 disposed adjacent to the motor structure 286 may directly provide power through the connection substrate.

FIG. 7A is a perspective view illustrating a state of a supporting structure in a closed state of an electronic device according to various embodiments of the disclosure.

FIG. 7B is a perspective view illustrating a state of a supporting structure in an opened state of an electronic device according to various embodiments of the disclosure.

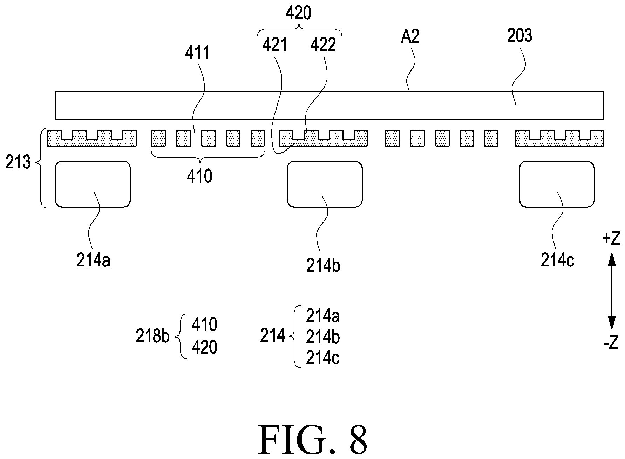

FIG. 8 is a view illustrating a stacked structure between a display, a supporting structure, and a plurality of bars according to an embodiment of the disclosure. FIG. 8 is an enlarged view of area S of FIG. 6A.

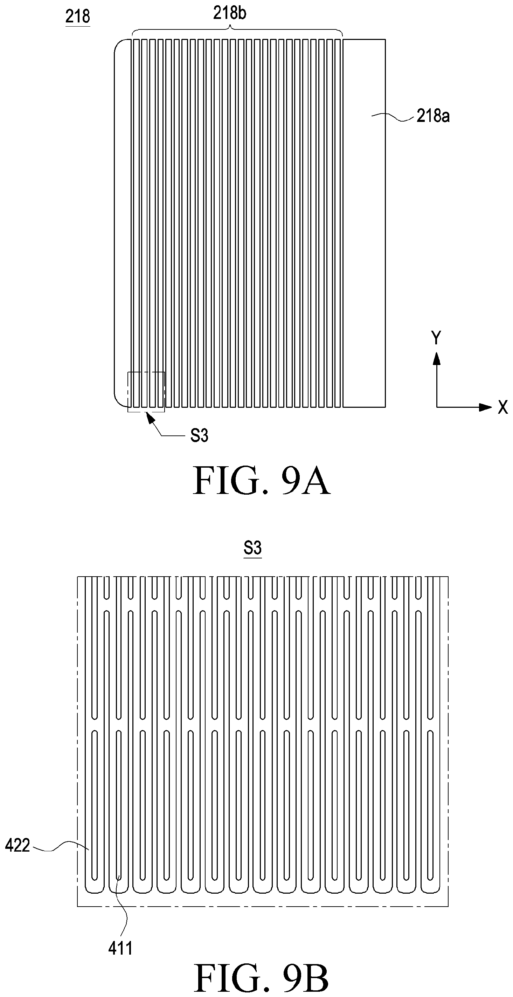

FIG. 9A is a view illustrating a front surface of a plate according to an embodiment of the disclosure.

FIG. 9B is an enlarged view illustrating an area S3 of FIG. 9A according to an embodiment of the disclosure.

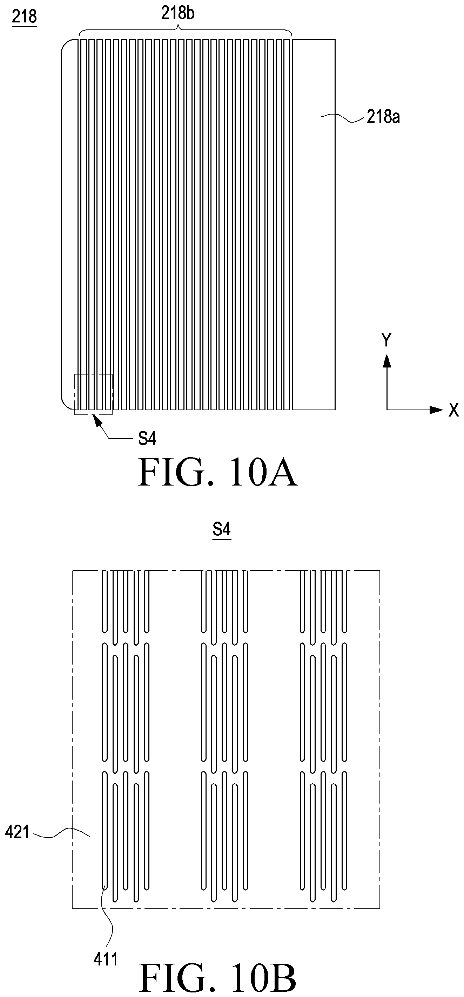

FIG. 10A is a view illustrating a front surface of a plate according to an embodiment of the disclosure.

FIG. 10B is an enlarged view illustrating an area S4 of FIG. 10A according to an embodiment of the disclosure.

According to an embodiment, an electronic device 101 may include a display (e.g., the display 203 of FIGS. 4A and 4B) and a supporting structure (e.g., the supporting structure 213 of FIGS. 4A and 4B) supporting the display 203.

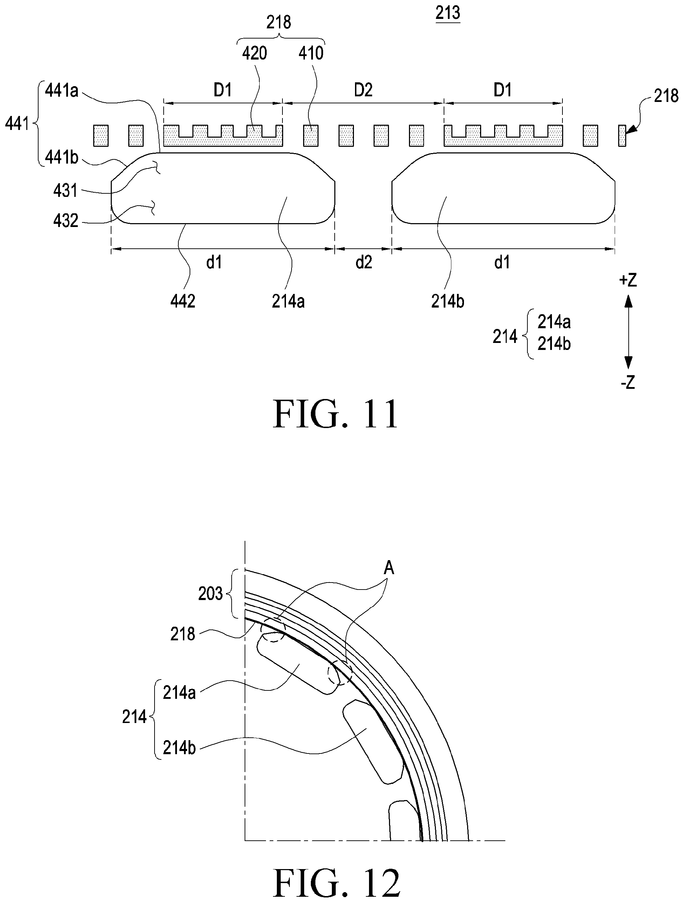

The configuration of the display 203 and the supporting structure 213 of FIGS. 7A to 10B may be identical in whole or part to the configuration of the display 203 and the supporting structure 213 of FIGS. 4A and 4B. The embodiments of FIGS. 7A to 10B may be at least partially combined with the embodiments of FIGS. 1 to 6B or the embodiments of FIGS. 11 to 17.

According to an embodiment, as the supporting structure 213 (and the display 203 (e.g., flexible display) connected with the supporting structure 213) is slid in/out about the first plate 211, the electronic device 101 may turn into the closed state or opened state.

According to an embodiment, the electronic device 101 may provide a supporting structure 213 capable of seamlessly performing the slide-in/slide-out motion. For example, when the display 203 slides in/out, a flat area may turn into a bent (or rolled) area, or a bent (or rolled) area may turn into a flat area.

According to an embodiment, the supporting structure 213 may include a plate 218 and a plurality of bars 214. The plate 218 may include a first plate portion 218a supporting a flat area (e.g., the first display area A1 of FIG. 4A) of the display 203 and a second plate portion 218b extending from the first plate portion 218a and supporting a bendable area (e.g., the second display area A2 of FIG. 4A) of the display 203. For example, the second plate portion 218b of the supporting structure 213 may be disposed between the second display area A2 of the display 203 and the plurality of bars 214, and may support the second display area A2 of the display 203.

According to an embodiment, the plate 218 of the supporting structure 213 may be formed of a strong material (e.g., steel use stainless (SUS)) to add durability to the flexible display 203. An upper portion of the plate 218 may be coupled (e.g., adhered) to the display, and a lower portion of the second plate 218b of the plate 218 may be coupled (e.g., adhered) to the plurality of bars 214.

According to an embodiment, the first plate portion 218a of the plate 218 may have a plate shape having a flat front surface and/or a flat rear surface. An edge of the first plate portion 218a may have a partially curved shape. The second plate portion 218b of the plate 218 may include first pattern areas 410 in which a plurality of openings 411 (e.g., through holes) are formed and second pattern areas 420 alternately arranged with the first pattern areas 410. The first pattern areas 410 may include a pattern in which a plurality of openings 411 are formed to facilitate bending and/or rolling of the flexible display 203. Each of the plurality of openings 411 may be a rectangular or elliptical hole having a length (e.g., Y-axis direction) longer than a width (e.g., X-axis direction). For example, each of the plurality of openings 411 may have a direction perpendicular to the sliding direction (e.g., the X-axis direction) of the flexible display 203, which forms the length, and may be arranged under the second display area A2 of the flexible display 203 along the sliding direction. The plurality of openings 411 may be arranged in a first array having a first vertical length and a second array having a second vertical length longer than the first vertical length along the sliding direction. The plurality of openings forming the first array and the plurality of openings forming the second array may be alternately arranged with each other. According to an embodiment, the plurality of openings 411 may be arranged in a direction perpendicular to the sliding direction.

According to an embodiment, the second plate portion 218b of the plate 218 may include the first pattern areas 410 and the second pattern areas 420 alternately arranged with the first pattern areas 410. When the second plate portion 218b of the plate 218 is viewed in the +Z-axis direction, the patterns of the first pattern areas (e.g., 410 of FIG. 8) may include the same pattern as the second pattern area (e.g., 420 of FIG. 8). When the second plate portion 218b of the plate 218 is viewed in the -Z-axis direction, the patterns of the first pattern areas (e.g., 410 of FIG. 8) may include a pattern distinct from the second pattern area (e.g., 420 of FIG. 8). When the second plate portion 218b of the plate 218 is viewed in the cross section in the Y-axis direction, the patterns of the first pattern areas (e.g., 410 of FIG. 8) may include broken (e.g., spaced or separated) patterns. When the second plate portion 218b of the plate 218 is viewed in the cross section in the Y-axis direction, the patterns of the second pattern areas (e.g., 420 of FIG. 8) may include connected patterns. The patterns of the first pattern areas may include shapes (e.g., openings) which are separated from each other. The patterns of the second pattern areas may include shapes (e.g., recesses) which are separated from each other. The shapes of the second pattern areas may be different from the shapes of the first pattern areas.

According to an embodiment, the second plate portion 218b of the plate 218 may include the first pattern areas 410 and the second pattern areas 420, and the first pattern areas 410 and the second pattern areas 420 may be alternately arranged. Each of the first pattern areas 410 may include a plurality of repeated shapes (e.g., first shapes), and the plurality of shapes may be separated (e.g., spaced apart) from each other. Each of the second pattern areas 420 may include a plurality of repeated shapes (e.g., second shapes), and portions of the plurality of shapes may be connected to each other. For example, upper portions of a plurality of shapes of each of the second pattern areas 420 may be spaced apart from each other, and lower portions may be connected to each other.

According to an embodiment, each of the second pattern areas 420 of the second plate portion 218b may include a supporting portion 421 and protruding portions 422 protruding from the supporting portion 421. The lower portion (e.g., the supporting portion 421) of the second pattern areas 420 may provide a flat surface to provide an area to which the plurality of bars 214 may adhere. The upper portions (e.g., the protruding portions 422) of the second pattern areas 420 may include recesses (e.g., grooves) having shapes corresponding to the plurality of openings 411 of the first pattern areas 410 to facilitate bending of the display 203 [.

According to an embodiment, each of the second pattern areas 420 may include a supporting portion 421 and protruding portions 422 protruding from the supporting portion 421. The supporting portion 421 may be disposed to face each of the plurality of bars 214. The protruding portions 422 may be formed to protrude side by side from the supporting portion 421 toward the display 203 in bar-shapes.

According to an embodiment, the plate 218 may include a first plate portion 218a and a second plate portion 218b which are connected to form a support body, e.g., a monolithic support body. The second plate portion 218b, as a support body, may include first pattern areas 410 and second pattern areas 420. According to an embodiment, each of the second pattern areas 420 forming the plate 218, as a support body, may include a supporting portion 421 and protruding portions 422. For example, the protruding portion 422 of the second pattern area 420 may have bar-type protruding parts, bump parts, or lump parts protruding from one surface of the supporting portion 421. The support body (e.g., the plate, the second plate portion, and/or the second pattern areas) is a structure formed through a process such as a cutting process or an etching process, and each component (e.g., the supporting portion 421 and the protruding portions 422) may be made of the same material.

According to an embodiment, each of the second pattern areas 420 of the second plate portion 218b may be a monolithic support body, and the monolithic support body may seamlessly extend from the supporting portion 421 to the protruding portions 422. According to an embodiment, in the support body, the supporting portion 421 and the protruding portions 422 may be formed as a single piece or one body, i.e. a monolithic support body. According to an embodiment, as the supporting portions 421 and the protruding portions 422 in the support body are formed by a cutting process, the supporting portions 421 and the protruding portions 422 may be separated into separate elements and then may not be coupled (e.g., adhered with an adhesive material) or assembled.

Referring to FIG. 9A, when viewed toward the front surface of the second plate portion 218b (when viewed toward the -Z-axis), the patterns of the first pattern areas 410 and the patterns of the second pattern areas 420 alternately arranged may look the same in shapes corresponding to each other, i.e. mathematically similar shapes. The respective protruding portions 422 of the second pattern areas 420 may be arranged side by side along the sliding direction of the display 203 in a bar shape having a vertical length larger than a horizontal (e.g., X-axis direction) length. The interval between the bar-shaped protruding portions 422 may be the same as the gap of each of the openings 411 of the first pattern area 410.

According to an embodiment, when viewed toward the front surface of the plate 218 (when viewed along the -Z-axis), the plurality of openings 411 formed in the first pattern areas 410 may be formed in hole shapes penetrating the second plate portion 218b. According to an embodiment, when the front surface of the plate 218 is viewed (when viewed along the -Z-axis), the spaces between the protruding portions 422 of the second pattern areas 420 may have recess shapes, such that the spaces between the protruding portions 422 are recessed or set back into the plate 218. The pattern array of the plurality of hole shapes or openings of the first pattern areas 410 may be the same as or similar to the pattern array of the plurality of recess shapes of the second pattern areas 420.

In the second plate portion 218b, recesses (e.g., holes or grooves) (having shapes corresponding to each other) may be (regularly) arranged in the front surfaces (e.g., surfaces facing the +Z-axis) of the first pattern areas 410 and the front surfaces (e.g., surfaces facing the +Z-axis) of the second pattern areas 420 to which the display 203 is adhered. In this way, the plate 218 may be formed in a structure that facilitates bending and/or rolling of the display 203, enhance the surface quality of the display 203, and maintain adhesion with the display 203 to secure durability against lifting.

According to an embodiment, the supporting structure 213 may include a plurality of bars 214 supporting a bendable area (e.g., the second display area A2 of FIG. 4) of the display 203. Referring to FIG. 8, the plurality of bars 214 may include a first bar 214a, a second bar 214b, and a third bar 214c, and the bars may be spaced apart from each other and may be disposed side by side. As an example, the bars (e.g., the first bar 214a, the second bar 214b, and the third bar 214c) of FIG. 8 may be designed to include four or more bars. The plurality of bars 214 may be bent and/or rolled together with the display 203, and their positions in the electronic device 101 may vary according to bending and/or rolling. The plurality of bars 214 may be disposed parallel to each other and may slide in response to the slide of the display 203. As the display 203 slides, the plurality of bars 310 may form a curved shape or may form a flat shape. For example, as the first housing 203 slides, a portion of the supporting structure 213 facing the curved surface 250 may form a curved surface, and another portion of the supporting structure 213 that does not face the curved surface 250 may form a flat surface.

According to an embodiment, the second display area A2 of the display 203 may be mounted or supported on the plurality of bars 214 of the supporting structure 213. In the slid-out state of the display 203, at least a portion of the second display area A2 may be exposed along with the first display area A1. In the state in which the second display area A2 is exposed to the outside, some of the plurality of bars 214 of the supporting structure 213 may substantially form a flat surface, thereby supporting or maintaining the second display area A2 in the flat state. Various design changes may be made to provide stable support the display 203, e.g., one plate. For example, the plurality of bars may be provided as a supporting member that may be a single plate formed of a flexible material, i.e., a bendable integral supporting member. According to an embodiment, the single flexible plate may be formed to have different thicknesses according to designated intervals to provide flexibility corresponding to the flexibility of the display.

According to an embodiment, the plurality of bars 214 may be positioned to face the second pattern areas 420, respectively. For example, the plurality of bars 214, respectively, may be adhered to the lower surfaces of the supporting portions 421 of the second pattern areas 420. For example, the lower surface (e.g., the surface facing in the -Z axis) of the supporting portion 421 may be formed as a flat surface without a pattern (e.g., hole or recess). An adhesive member 510 may be disposed between the flat lower surface and the bar 214 to directly couple the supporting portion 421 of the second pattern area 420 and the bar 214. Accordingly, the shape of the supporting portion 421 may maintain strong adhesion between the plate 218 including the second pattern area 420 and the plurality of bars 214.

According to an embodiment, as the display 203 slides, at least some of the plurality of bars 214 may orbit around the battery (e.g., the battery 289 of FIG. 4). For example, in the slid-in state of the display 203, the plurality of bars 214 may be disposed to be spaced apart from each other along the side surface of the battery 289 in the -Z-axis direction of the battery 289. In the slid-out state of the display 203, the plurality of bars 214 may slide and be thus disposed to be spaced apart along the side surface of the battery 289 in the +Z-axis direction of the battery 289.

FIG. 11 is a cross-sectional view illustrating a shape of a plurality of bars attached and a plate according to an embodiment of the disclosure.

FIG. 12 is a cross-sectional view illustrating an arrangement of a plurality of bars positioned in a bending section when a display bends according to an embodiment of the disclosure.

According to an embodiment, an electronic device 101 may include a display (e.g., the display 203 of FIGS. 4A and 4B) and a supporting structure (e.g., the supporting structure 213 of FIGS. 4A and 4B) supporting the display 203.

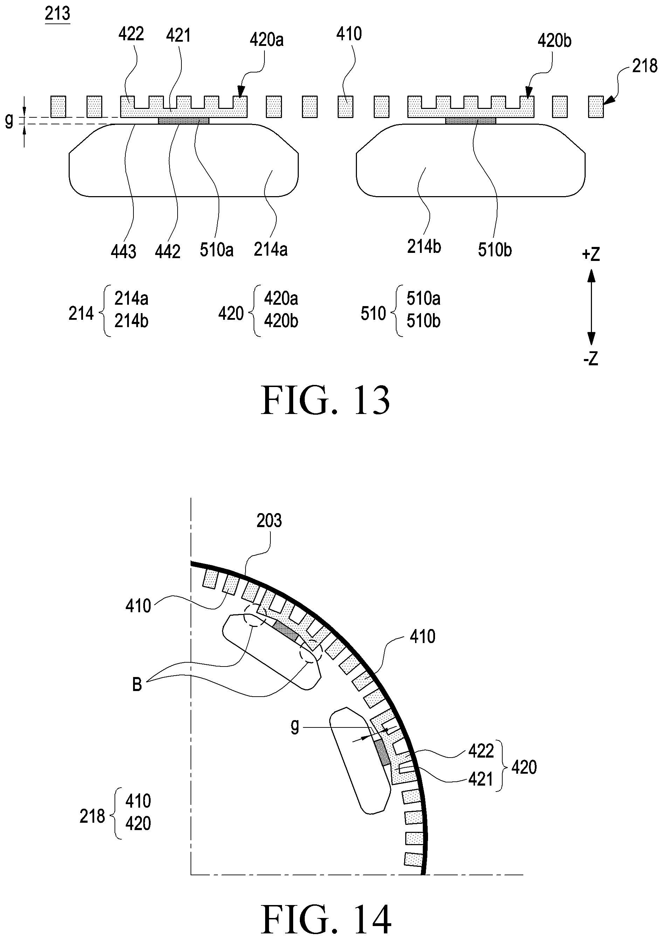

The configuration of the display 203 and the supporting structure 213 of FIGS. 11 and 12 may be identical in whole or part to the configuration of the display 203 and the supporting structure 213 of FIGS. 4A and 4B. The embodiments of FIGS. 11 and 12 may be at least partially combined with the embodiments of FIGS. 1 to 10B, or the embodiments of FIGS. 13 to 17.

According to an embodiment, when the display 203 is bent, the plurality of bars 214 may be arranged to correspond to bending (or rolling) of the display 203, and may support the display 203 so as not to be lifted in the bending section (or rolling section).

According to an embodiment, the plurality of bars 214 may be adhered to the second pattern areas 420 of the plate 218. In order to enhance or maintain rigidity in the bending section of the display 203, each of the plurality of bars 214 may be designed to have a maximum width in consideration of the shape of the entire supporting structure 213 and the arrangement between the bars 214, and to have a minimum interval between the bars 214. For example, the plurality of bars 214 may include a first bar 214a and a second bar 214b arranged side by side, a width of each of the first bar 214a and the second bar 214b may be formed to have a first length d1, and an interval between the first bar 214a and the second bar 214b may be formed to have a second length d2. The first length d1 may be larger than the second length d2. For example, the widths (e.g., the first length d1) of the first bar 214a and the second bar 214b arranged side by side may be larger than the width D1 of the second pattern area 420, and the interval (e.g., the second length d2) between the first bar 214a and the second bar 214b may be smaller than the width D2 of the first pattern area 410.

The plurality of bars may be arranged under the plate, with a width of about 1.0 mm. A narrow bar width, such as 1.0mm reduces interference or visibility/detectability of the support structure in the bending section of the display. In effect, the narrow bar width improves the flexibility of the display and facilitates smooth bending thereof. When the size of the plurality of bars increases, for example to a width of about 1.6 mm, adhesion to the plate and the surface quality of the display is improved, but interference may occur in the bending section of the display, and stress may occur in the display. According to an embodiment, it is possible to reduce or restrict interference in the bending section of the display 203 by forming an inclination or curve in the area of the bars adjacent to the display 203 (e.g., the upper portion 431 of the first bar 214a) while increasing the widths of the plurality of bars 214.

According to an embodiment, each of the plurality of bars 214 may be formed so that the edge of the upper portion 431 is inclined. For example, each of the plurality of bars 214 may include a first surface 441 facing the second pattern area 420 (e.g., facing in the +Z-axis direction), a center area 441a of the first surface 441 may be formed as a flat surface facing at least a portion of the second pattern area 420, and an edge area 441b extending from the center area 441a may be inclined to be away from the second pattern area 420.

According to an embodiment, each of the plurality of bars 214 may include a first surface 441 for adhering to the second pattern area 420 and a second surface 442 facing away from the first surface 441. As the partial edge of the upper portion 431 of each of the plurality of bars 214 is inclined, the width of the center area 441a of the first surface 441 may be smaller than the width of the second surface 442.

According to an embodiment, as the edge of the upper portion 431 of each of the plurality of bars 214 is inclined, it is possible to increase the width of each of the plurality of bars 214 and to decrease the interval between the plurality of bars 214. For example, referring to FIG. 12, when the width of each of the plurality of bars 214 is increased in the bending section of the display 203, the edge (e.g., the area A near the edge) of each of the plurality of bars 214 may interfere with the display 203 (or the first and second pattern areas 410 and 420 of the plate), causing stress on the display 203. As each of the plurality of bars 214 according to the disclosure is formed such that the edge of the upper portion 431 is inclined (or has a curved surface), it is possible to maintain the surface quality of the display 203 while maintaining the rigidity of the plurality of bars 214 without substantially interfering with the display 203 (or the first and second pattern areas 410 and 420 of the plate).

FIG. 13 is a cross-sectional view illustrating a shape of a plurality of bars attached and a plate according to an embodiment of the disclosure.

FIG. 14 is a cross-sectional view illustrating an arrangement of a plurality of bars positioned in a bending section when a display bends according to an embodiment of the disclosure.

According to an embodiment, an electronic device 101 may include a display (e.g., the display 203 of FIGS. 4A and 4B) and a supporting structure (e.g., the supporting structure 213 of FIGS. 4A and 4B) supporting the display 203.

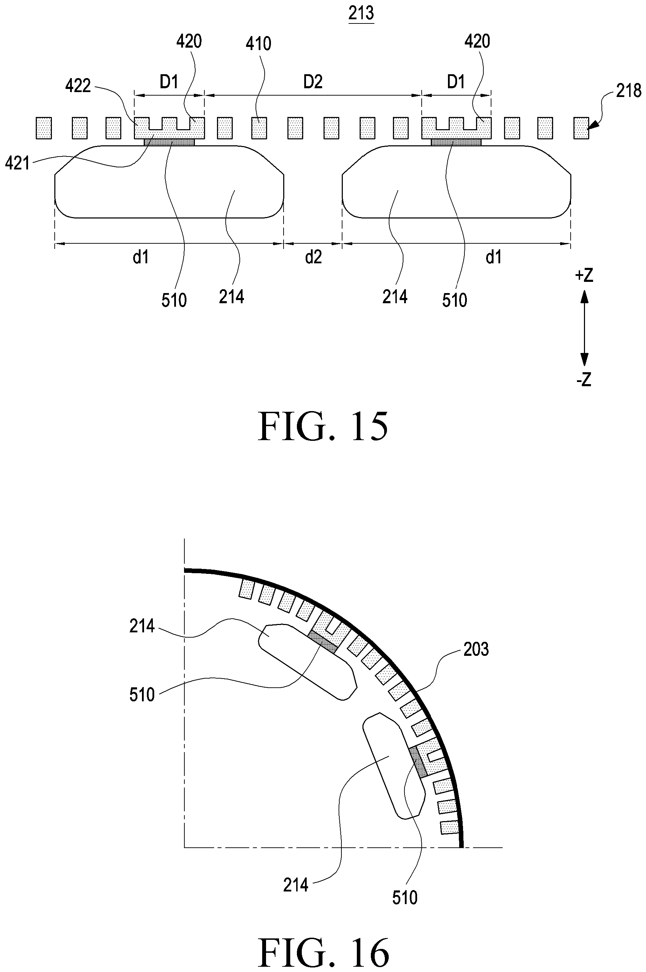

The configuration of the display 203 and the supporting structure 213 of FIGS. 13 and 14 may be identical in whole or part to the configuration of the display 203 and the supporting structure 213 of FIGS. 4A and 4B. The embodiments of FIGS. 13 and 14 may be at least partially combined with the embodiments of FIGS. 1 to 12, or the embodiments of FIGS. 15 to 17.

According to an embodiment, the supporting structure 213 may include a plate 218 and a plurality of bars 214. The plate 218 may be disposed under the display 203, and the plurality of bars 214 may be stacked under the plate 218.

According to an embodiment, the plurality of bars 214 under the plate 218 may be adhered by the adhesive member 510. For example, the plurality of bars 214, respectively, may be adhered to the second pattern areas 420 of the plate 218. The second pattern areas 420 each may include a supporting portion 421 and protruding portions 422 protruding from the supporting portion 421, and the lower surface (e.g., the surface facing the -Z axis) of the supporting portion 421 may provide a flat attaching surface for disposing the adhesive member 510.

According to an embodiment, the plurality of bars 214 may include a first bar 214a and a second bar 214b. The second pattern areas 420 of the plate 218 may include a first pattern area 420a and a second pattern area 420b. A first adhesive member 510a may be disposed on the lower surface of the first pattern area 420a, and the first pattern area 420a and the first bar 214a may be coupled to each other by the first adhesive member 510a. A second adhesive member 510b may be disposed on the lower surface of the second pattern area 420b, and the second pattern area 420b and the second bar 214b may be coupled to each other by the second adhesive member 510b.

According to an embodiment, the first adhesive member 510a may be an applyable adhesive material and/or solder provided through a partial welding process to be disposed on a portion of the lower surface of the first pattern area 420a. As the first adhesive member 510a is disposed on a portion of the lower surface rather than the entire lower surface of the first pattern area 420a, the surface for attachment between the first pattern area 420a and the first bar 214a may be reduced. The arrangement and function of the first adhesive member 510a may apply to the arrangement and function of the second adhesive member 510b.

According to an embodiment, the first adhesive member 510a may be disposed in the center area 442 of the lower surface of the first pattern area 420a. Since the first adhesive member 510a is not disposed in the edge area 443 of the lower surface of the first pattern area 420a, a gap g may occur between the first bar 214a and the first pattern area 420a in which the first adhesive member 510a is not disposed. The gap g may be formed as a distance capable of preventing contact between the first bar 214a and the first pattern area 420a in the bending section of the display 203. The arrangement and function of the first adhesive member 510a may apply to the arrangement and function of the second adhesive member 510b.

In general, when a solid-state thermal bonding tape is used as an adhesive member between the plate and the bar, a minimum area of the tape required is as much as an area corresponding to the second pattern area in consideration of a design tolerance, which may cause stress due to interference between the second pattern area of the plate and the bar (see circle B in FIG. 14). According to an embodiment of the disclosure, the first adhesive member 510a (or the second adhesive member 510b) is not substantially disposed in the edge area 443 of the lower surface of the second pattern area 420, but is positioned limitedly in the center area 442, thereby reducing or restricting stress due to interference between the second pattern area 420 and the bar in the bending section of the display 203 while securing smooth surface quality (e.g., implement an optimal display curved surface or a smooth curved surface) of the display.

FIG. 15 is a cross-sectional view illustrating a shape of a plurality of bars attached and a plate according to an embodiment of the disclosure.

FIG. 16 is a cross-sectional view illustrating an arrangement of a plurality of bars positioned in a bending section when a display bends according to an embodiment of the disclosure.

According to an embodiment, an electronic device 101 may include a display (e.g., the display 203 of FIGS. 4A and 4B) and a supporting structure (e.g., the supporting structure 213 of FIGS. 4A and 4B) supporting the display 203.

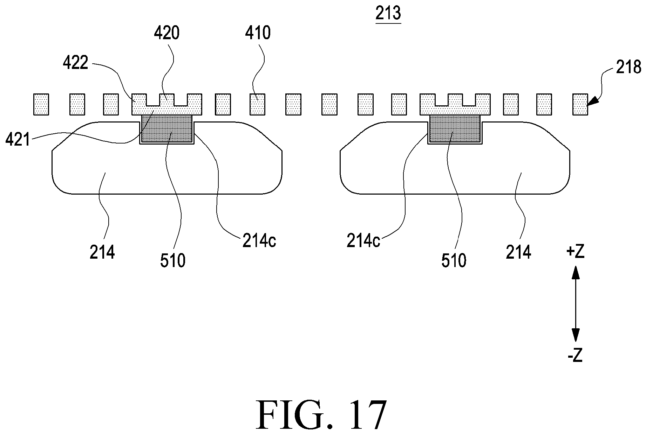

The configuration of the display 203 and the supporting structure 213 of FIGS. 15 and 16 may be identical in whole or part to the configuration of the display 203 and the supporting structure 213 of FIGS. 4A and 4B. The embodiments of FIGS. 15 and 16 may be at least partially combined with the embodiments of FIGS. 1 to 14, or the embodiments of FIG. 17.

According to an embodiment, the supporting structure 213 may include a plate 218 and a plurality of bars 214. The plate 218 may be disposed under the display 203, and the plurality of bars 214 may be stacked under the plate 218.

According to an embodiment, the plurality of bars 214 under the plate 218 may be adhered by an adhesive member 510. For example, the plurality of bars 214, respectively, may be adhered to the second pattern areas 420 of the plate 218. The second pattern areas 420 each may include a supporting portion 421 and protruding portions 422 protruding from the supporting portion 421, and the lower surface (e.g., the surface facing the -Z axis) of the supporting portion 421 may provide a flat attaching surface for disposing the adhesive member 510.

According to an embodiment, the adhesive member 510 may be an applyable adhesive material and/or solder provided through a partial welding process to be disposed on a portion of the lower surface of the second pattern area 420.

According to an embodiment, the width d1 of each of the plurality of bars 214 may be larger than the width D1 of each of the second pattern areas 420. For example, the width d1 of each of the plurality of bars 214 may be about 2 to 4 times the width D1 of each of the second pattern areas 420. By providing the adhesive member 510 as an applyable adhesive material and/or solder for a partial welding process, it is possible to maintain strong adhesion while reducing the area of the adhesive member 510. Accordingly, as compared to other embodiments, the width D1 of each of the second pattern areas 420 for adhesion to each of the bars may be further reduced and, as compared with the width d1 of each bar, the width D1 of each second pattern area 420 may be relatively reduced as compared with other embodiments.

According to an embodiment, the first pattern areas 410 and the second pattern areas 420 of the plate 218 may be alternately arranged. The width D2 of each of the first pattern areas 410 of the plate 218 may be larger than the width D1 of each of the second pattern areas 420. For example, the width D2 of each of the first pattern areas 410 of the plate 218 may be about 2 to 4 times the width D1 of each of the second pattern areas 420. As the width D2 of each of the first pattern areas 410 is relatively larger than the width D1 of each of the second pattern areas 420 as compared with other embodiments, it is possible to reduce or restrict stress between the bar and the second pattern area 420 in the bending section of the display 203 and to secure smooth surface quality (e.g., implement an optimal display curved surface) of the display.

FIG. 17 is a cross-sectional view illustrating a shape of a plurality of bars attached and a plate according to an embodiment of the disclosure.

According to an embodiment, an electronic device 101 may include a display (e.g., the display 203 of FIGS. 4A and 4B) and a supporting structure (e.g., the supporting structure 213 of FIGS. 4A and 4B) supporting the display.

The configuration of the supporting structure 213 of FIG. 17 may be identical in whole or part to the configuration of the supporting structure 213 of FIGS. 4A and 4B. The embodiment of FIG. 17 may be at least partially combined with the embodiments of FIGS. 1 to 16.

According to an embodiment, each of the plurality of bars 214 under the plate 218 may be adhered by an adhesive member 510. For example, the plurality of bars 214, respectively, may be adhered to the second pattern areas 420 of the plate 218. The second pattern areas 420 each may include a supporting portion 421 and protruding portions 422 protruding from the supporting portion 421, and the lower surface (e.g., the surface facing the -Z axis) of the supporting portion 421 may provide a flat attaching surface for disposing the adhesive member 510.

According to an embodiment, to secure an area where the adhesive member 510 is attached to the bar 214, each of the plurality of bars 214 may form a recess 214c cut inward. The recess 214c may be positioned in a front surface (e.g., the surface facing the +Z axis) of the bar 214 corresponding to the lower surface of the second pattern area 420 and may have a shape corresponding to the lower portion of the adhesive member 510 to seat the adhesive member 510. For example, when the recess 214c is formed in a rectangular recess shape, the areas where the adhesive member 510 is to be adhered to the bar 214 are expanded to at least three or more surfaces (e.g., five surfaces), so that the adhesion between the adhesive member 510 and the bar 214 may be strengthened.

According to an embodiment, the adhesive member 510 disposed in the recess 214c of the bar 214 may protrude by a certain length toward the second pattern area 420. The front surface of the protruding adhesive member 510 may be adhered to the second pattern area 420, and the side surface of the protruding adhesive member 510 may form a designated distance (e.g., gap g) between the plate 218 and the plurality of bars 214. The formed gap g may reduce or restrict stress between the second pattern area 420 and the bar in the bending section of the display, and the display may secure smooth surface quality (e.g., implement an optimal display curved surface).

In an electronic device including a flexible display extendable by sliding, a plurality of housings may move (e.g., slide, rotate, or pivot) relative to each other. For example, the first housing and a partial area of the flexible display may move into or away from the second housing.

To stably bend and/or roll the flexible display in the electronic device, a supporting structure (e.g., a plate and a plurality of bars) may be stacked with the flexible display. The plate may include a pattern (e.g., recess or opening) for bending and/or rolling of the flexible display. When the flexible display bends and/or rolls, if adhesion between the plate and the plurality of bars stacked thereupon deteriorates, surface quality of the display may deteriorate, e.g., be damaged. When no pattern is applied to a partial area of the plate to strengthen adhesion, the surface quality of the display may deteriorate due to heterogeneity in the non-patterned section.

According to various embodiments of the disclosure, it is possible to prevent deterioration of surface quality of the display by enhancing the shape of the plurality of bars and/or the plate supporting the flexible display.

According to various embodiments, there may be provided an electronic device that allows for stable relative movements of first and second housings and a slide-in/out of the flexible display.

According to various embodiments, an electronic device may include a stacked structure of a plurality of bars, a plate, and a flexible display and may provide an enhanced structure in which an upper portion of the plate facing the flexible display is patterned while a lower portion of the plate facing the plurality of bars is not patterned. The bending and/or rolling of the flexible display may be stably performed by the pattern of the upper portion of the plate, and the adhesion with the plurality of bars may be strengthened by the non-patterned lower portion of the plate, thereby reducing deterioration of surface quality, such as display lifting.

In the electronic device according to various embodiments, the upper portion of the plurality of bars supporting the flexible display may include an inclination or inclined surface. Accordingly, it is possible to reduce stress on the flexible display and to restrict interference due to the edge portions of the plurality of bars and the flexible display when the flexible display bends and/or rolls.

Effects of the disclosure are not limited to the foregoing, and other unmentioned effects would be apparent to one of ordinary skill in the art from the following description.

An electronic device (e.g., the electronic device 101 of FIGS. 1 to 4B) according to an embodiment of the disclosure may comprise a first housing (e.g., 201 of FIGS. 2 to 4B), a second housing (e.g., 202 of FIGS. 2 to 4B) configured to move with respect to the first housing, a flexible display (e.g., 203 of FIGS. 2 to 4B) including a first display area (e.g., A1 of FIGS. 2 to 4B) and a second display area (e.g., A2 of FIGS. 2 to 4B) extended from the first display area, wherein the second display area is rolled in or out based on a movement of the second housing, a plurality of bars (e.g., 214 of FIGS. 4A and 4B) arranged under the second display area, and a plate (e.g., 218 of FIGS. 4A and 4B) disposed between the second display area and the plurality of bars, and configured to support at least a portion of the second display area.

According to an embodiment, the plate (e.g., 218 of FIGS. 4A and 4B) may include first pattern areas (e.g., 410 of FIG. 8) including patterns of shapes which are separated from each other and second pattern areas (e.g., 420 of FIG. 8) including patterns of shapes which are separated from each other. The shapes of the second pattern areas may be different from the shapes of the first pattern areas. The first pattern areas and the second pattern areas may be alternately arranged.

According to an embodiment, the plate (e.g., 218 of FIGS. 4A and 4B) may include first pattern areas (e.g., 410 of FIG. 8) and second pattern areas (e.g., 420 of FIG. 8) arranged alternately with the first pattern areas and including patterns corresponding to the patterns of the first pattern areas. For example, when viewed in a third direction (e.g., +Z-axis direction), the patterns of the first pattern areas (e.g., 410 of FIG. 8) may include the same pattern as the second pattern area (e.g., 420 of FIG. 8). For example, when viewed in a fourth direction (e.g., -Z-axis direction), the patterns of the first pattern areas (e.g., 410 of FIG. 8) may include patterns distinct from the second pattern area (e.g., 420 of FIG. 8). For example, when viewed in cross section in the horizontal direction (e.g., Y-axis direction), the patterns of the first pattern areas (e.g., 410 of FIG. 8) may include broken patterns. For example, when viewed in cross section in the horizontal direction (e.g., Y-axis direction), the patterns of the second pattern areas (e.g., 420 of FIG. 8) may include connected patterns.

According to an embodiment, the first pattern areas 410 of the plate (e.g., 218 of FIGS. 4A and 4B) may be disposed not to face the plurality of bars 214, and the second pattern areas 420, respectively, of the plate (e.g., 218 of FIGS. 4A and 4B) may be disposed to face the plurality of bars 214. The second pattern areas, respectively, of the plate may be disposed to face individually the plurality of bars.

According to an embodiment, the plate (e.g., 218 of FIGS. 4A and 4B) may include first pattern areas (e.g., 410 of FIG. 8) including a plurality of openings (e.g., 411 of FIG. 8) and second pattern areas (e.g., 420 of FIG. 8) arranged alternately with the first pattern areas.

According to an embodiment, each of the second pattern areas (e.g., 420 of FIG. 8) may include a supporting portion (e.g., 421 of FIG. 8) and bar-shaped protruding portions (e.g., 422 of FIG. 8). The supporting portion may be disposed to face a respective one of the plurality of bars. The bar-shaped protruding portions (e.g., 422 of FIG. 8) are protruded from the supporting portion toward the flexible display in parallel to each other.

According to an embodiment, the supporting portion (e.g., 421 of FIG. 8) and the bar-shaped protruding portions (e.g., 422 of FIG. 8) of each of the second pattern areas (e.g., 420 of FIG. 8) may be connected to form a support body.

According to an embodiment, the supporting portion (e.g., 421 of FIG. 8) of each of the second pattern areas (e.g., 420 of FIG. 8) may be adhered to each of the plurality of bars, and the bar-shaped protruding portions (e.g., 422 of FIG. 8) of each of the second pattern areas (e.g., 420 of FIG. 8) may be adhered to the second display area of the flexible display.

According to an embodiment, the first pattern areas (e.g., 410 of FIG. 8) may be adhered to the second display area of the flexible display, and the first pattern areas (e.g., 410 of FIG. 8) may be disposed not to overlap the plurality of bars.

According to an embodiment, a pattern formed by the plurality of openings of the first pattern areas (e.g., 410 of FIG. 8) may correspond to (e.g., be similar or identical to) a pattern formed by the bar-shaped protruding portions of the second pattern areas (e.g., 420 of FIG. 8).

According to an embodiment, the plurality of bars (e.g., 214 of FIG. 8) may be formed to be varied in response to the rolling-in or rolling-out of the second display.

According to an embodiment, each of the plurality of bars (e.g., 214 of FIG. 11) may include an upper portion (e.g., 431 of FIG. 11) facing the plate and a lower portion (e.g., 432 of FIG. 11) opposite to the upper portion. The upper portion may be formed so that at least a portion of an edge thereof is inclined.

According to an embodiment, each of the plurality of bars (e.g., 214 of FIG. 11) may include a first surface (e.g., 441 of FIG. 11) facing the second pattern area and a second surface (e.g., 442 of FIG. 11) facing in a direction opposite to the first surface.

According to an embodiment, a center area (e.g., 441a of FIG. 11) of the first surface of each of the plurality of bars may be formed of a flat surface configured to adhere to at least a portion of the second pattern area, and an edge area (e.g., 441b of FIG. 11) extended from the center area may be inclined away from the second pattern area.

According to an embodiment, the width of the center area (e.g., 441a of FIG. 11) of the first surface (e.g., 441 of FIG. 11) of each of the plurality of bars may be smaller than the width of the second surface (e.g., 441b of FIG. 11).

According to an embodiment, a width of each of the first pattern areas of the plate (e.g., 218 of FIG. 11) and a width of each of the second pattern areas may correspond to each other. A width of each of the plurality of bars (e.g., 214 of FIG. 11) may be larger than an interval between the plurality of bars.

According to an embodiment, the width of each of the first pattern areas of the plate (e.g., 218 of FIG. 15) may be larger than the width of each of the second pattern areas of the plate (e.g., 218 of FIG. 15). A width of each of the plurality of bars (e.g., 214 of FIG. 15) may be larger than an interval between the plurality of bars.

According to an embodiment, the electronic device may comprise an adhesive member (e.g., 510 of FIG. 13) disposed between each of the second pattern areas of the plate (e.g., 218 of FIG. 13) and each of the plurality of bars.

According to an embodiment, the adhesive member (e.g., 510 of FIG. 13) may be disposed in a center area of a lower surface of the second pattern areas, and a gap of a first length may be formed between an edge area of the lower surface of the second pattern area and each of the plurality of bars.

According to an embodiment, in a bending section of the flexible display, a gap of a second length smaller than the first length may be formed between the edge area of the lower surface of the second pattern area and each of the plurality of bars.

According to an embodiment, each of the plurality of bars (e.g., 214 of FIG. 17) may include a recess (e.g., 214c of FIG. 17) recessed inward, and the adhesive member may be seated in the recess.

An electronic device (e.g., the electronic device 101 of FIGS. 1 to 4B) according to an embodiment of the disclosure may comprise a first housing (e.g., 201 of FIGS. 2 to 4B), a second housing (e.g., 202 of FIGS. 2 to 4B) configured to move with respect to the first housing, a flexible display (e.g., 203 of FIGS. 2 to 4B) including a first display area (e.g., A1 of FIGS. 2 to 4B) and a second display area (e.g., A2 of FIGS. 2 to 4B) extending from the first display area, wherein the second display area is configured to be rolled in or out based on a movement of the second housing, a plurality of bars (e.g., 214 of FIGS. 4A and 4B) arranged under the second display area, and a plate (e.g., 218 of FIGS. 4A and 4B) disposed between the second display area and the plurality of bars, and configured to support at least a portion of the second display area.

According to an embodiment, the plate (e.g., 218 of FIGS. 4A and 4B) may include first pattern areas (e.g., 410 of FIG. 8) including a plurality of openings (e.g., 411 of FIG. 8) and second pattern areas (e.g., 420 of FIG. 8) arranged alternately with the first pattern areas and having patterns corresponding to the patterns of the first pattern areas. Each of the plurality of bars (e.g., 214 of FIG. 11) may include an upper portion (e.g., 431 of FIG. 11) facing the plate and a lower portion (e.g., 432 of FIG. 11) opposite to the upper portion, and the upper portion may be formed so that at least a portion of an edge thereof is inclined.

According to an embodiment, the plurality of openings (e.g., 411 of FIG. 8) of each of the first pattern areas (e.g., 410 of FIG. 8) may be shaped as through holes.

According to an embodiment, each of the second pattern areas (e.g., 420 of FIG. 8) may include a plurality of recesses, and an array of the plurality of recesses may be arranged to correspond to an array of the plurality of openings.

According to an embodiment, each of the second pattern areas (e.g., 420 of FIG. 8) may include a supporting portion (e.g., 421 of FIG. 8) and bar-shaped protruding portions (e.g., 422 of FIG. 8). The supporting portion are disposed to face a respective one of the plurality of bars. The bar-shaped protruding portions protrude from the supporting portion toward the flexible display in parallel to each other.

According to an embodiment, the supporting portion (e.g., 421 of FIG. 8) of the second pattern areas (e.g., 420 of FIG. 8) and the bar-shaped protruding portions (e.g., 422 of FIG. 8) may be formed of a monolithic support body.

According to an embodiment, the supporting portion (e.g., 421 of FIG. 8) of the second pattern areas (e.g., 420 of FIG. 8) may be adhered to each of the plurality of bars, and the bar-shaped protruding portions (e.g., 422 of FIG. 8) of the second pattern areas may be adhered to the second display area of the flexible display.

## Claims

1. An electronic device, comprising:
a first housing (201);
a second housing (202) configured to move with respect to the first housing;
a flexible display (203) including a first display area (A1) and a second display area (A2) extending from the first display area, wherein the second display area is configured to roll in or out based on a movement of the second housing;
a plurality of bars (214) arranged under the second display area; and
a plate (218) disposed between the second display area and the plurality of bars, and configured to support at least a portion of the second display area,
wherein the plate includes first pattern areas (410) including patterns of shapes which are separated from each other and second pattern areas (420) including patterns of shapes which are separated from each other, wherein the shapes of the second pattern areas (420) are different from the shapes of the first pattern areas (410),
wherein the first pattern areas (410) and the second pattern areas (420) are configured to be alternately arranged, and
wherein the first pattern areas (410) are disposed not to face the plurality of bars (214), and each of the second pattern areas (420) are disposed to face a respective one of the plurality of bars (214).

2. The electronic device of claim 1, wherein each of the first pattern areas (410) includes a plurality of openings (411), and
wherein each of the second pattern areas (420) includes a supporting portion (421) and bar-shaped protruding portions (422),
wherein the supporting portion (421) is disposed to face the respective one of the plurality of bars, and
wherein the bar-shaped protruding portions (422) protrude from the supporting portion toward the flexible display in parallel to each other.

3. The electronic device of claim 2,
wherein the supporting portion (421) and the bar-shaped protruding portions (422) of each of the second pattern areas (420) are connected to form a support body.

4. The electronic device of claim 2 or 3,
wherein the supporting portion (421) of each of the second pattern areas (420) is adhered to the respective one of the plurality of bars, and wherein the bar-shaped protruding portions (422) of each of the second pattern areas (420) are adhered to the second display area of the flexible display.

5. The electronic device of any one of claims 1 to 4,
wherein the first pattern areas (410) are adhered to the second display area of the flexible display, and
wherein the first pattern areas (410) are disposed not to overlap the plurality of bars.

6. The electronic device of any one of claims 2 to 5,
wherein a pattern formed by the plurality of openings of the first pattern areas (410) corresponds to a pattern formed by the bar-shaped protruding portions of the second pattern areas (420).

7. The electronic device of any one of claims 1 to 6,
wherein each of the plurality of bars (214) includes an upper portion (431) facing the plate and a lower portion (432) opposite to the upper portion, and
wherein the upper portion is formed so that at least a portion of an edge thereof is inclined.

8. The electronic device of any one of claims 1 to 6,
wherein each of the plurality of bars (214) includes a first surface (441) facing the second pattern area and a second surface (442) facing in a direction opposite to the first surface, and
wherein a center area (441a) of the first surface is flat to adhere to at least a portion of the second pattern area, and
wherein an edge area (441b) of the first surface, extending from the center area, is inclined away from the respective second pattern area, and
wherein a width of the center area (441a) of the first surface (441) is smaller than a width of the second surface (442).

9. The electronic device of any one of claims 1 to 8,
wherein a width of each of the first pattern areas of the plate (218) is larger than, or equal to, a width of each of the second pattern areas of the plate (218), and
wherein a width of each of the plurality of bars (214) is larger than an interval between the plurality of bars.

10. The electronic device of any one of claims 1 to 8, further comprising
an adhesive member (510) disposed between each of the second pattern areas of the plate (218) and each of the plurality of bars.

11. The electronic device of claim 10,
wherein the adhesive member (510) is disposed in a center area of a lower surface of the second pattern areas, and a gap of a first length is formed between an edge area of the lower surface of the second pattern area and each of the plurality of bars.

12. The electronic device of claim 11, wherein in a bending section of the flexible display,
a gap of a second length smaller than the first length is formed between the edge area of the lower surface of the second pattern area and each of the plurality of bars.

13. The electronic device of any one of claims 10 to 12,
wherein each of the plurality of bars (214) includes a recess (214c) recessed inward, and wherein the adhesive member is seated in the recess.

14. An electronic device, comprising:
a first housing (201);
a second housing (202) configured to slide with respect to the first housing;
a flexible display (203) including a first display area (A1) and a second display area (A2) extended from the first display area, and wherein the second display area is rolled in or out based on a movement of the second housing;
a plurality of bars (214) arranged under the second display area; and
a plate (218) disposed between the second display area and the plurality of bars and configured to support at least a portion of the second display area,
wherein the plate includes first pattern areas (410) including a plurality of openings (411) and second pattern areas (420) arranged alternately with the first pattern areas,
wherein each of the plurality of bars (214) includes an upper portion (431) facing the plate and a lower portion (432) opposite to the upper portion, and wherein the upper portion is formed so that at least a portion of an edge thereof is inclined.

15. The electronic device of claim 14,
wherein the plurality of openings (411) of each of the first pattern areas (410) are shaped as through holes,
wherein each of the second pattern areas (420) includes a plurality of recesses, and wherein an array of the plurality of recesses is arranged to correspond to an array of the plurality of openings.
